# EUROPEAN PATENT SPECIFICATION

(11) **EP 3 493 563 B1**
(45) Date of publication and mention of the grant of the patent: **07.10.2020**
(21) Application number: 16913747.8
(22) Date of filing: 23.08.2016
(51) Int. Cl.: H04W 4/12, H04W 28/10, H04W 88/18, H04W 76/00

(54) **METHOD AND NETWORK EQUIPMENT FOR PROCESSING SIGNALS AND INFORMATION**
VERFAHREN UND NETZWERKAUSRÜSTUNG ZUR VERARBEITUNG VON SIGNALEN UND INFORMATIONEN
PROCÉDÉ ET ÉQUIPEMENT DE RÉSEAU POUR TRAITER DES SIGNAUX ET DES INFORMATIONS

(43) Date of publication of application: 05.06.2019
(73) Proprietor: Huawei Technologies Co., Ltd., Longgang District Shenzhen, Guangdong 518129 (CN)
(72) Inventor: XIONG, Chunshan, Shenzhen Guangdong 518129 (CN); WU, Yizhuang, Shenzhen Guangdong 518129 (CN)
(74) Representative: Thun, Clemens
(86) International application number: PCT/CN2016/096438
(87) International publication number: WO 2018/035723

(56) References cited:
- EP-A2- 2 696 610
- CN-A- 102 918 876
- KR-A- 20040 094 139
- US-A1- 2007 124 386
- US-A1- 2014 126 448

## Description

### TECHNICAL FIELD

The present invention relates to the communications field, and in particular, to a method for processing information or a message, and a network device.

### BACKGROUND

With rapid development of communications technologies, communications networks provide increasingly abundant services to users. Therefore, a network side communicates more frequently with user equipment (English full name: User Equipment, UE).

In many cases, a network side in a communications network needs to frequently send a message to user equipment. For example, during session management in an evolved packet system (English full name: Evolved Packet System, EPS), the UE and a core network need to synchronize a session context, for example, synchronize bearer context information in a session. When the network side modifies session information, the network side needs to send a session update message to the UE in time, to notify the UE of the modified session information.

When the network side processes information about the UE, if the UE is in a connected mode, the network side may directly send the information. If the UE is in an idle mode (for example, an idle mode), the network side usually initiates a paging procedure to the UE, so that the UE enters the connected mode by using a service request procedure, to receive the information and execute content indicated by the information. For example, during the session management in the EPS, the network side sends a paging message to the UE in the idle mode, so that the UE enters the connected mode to perform a session synchronization process, and obtain updated session information.

However, it can be learned from the foregoing process in which the network side processes the information about the UE in the idle mode that, in a scenario without data transmission or in a scenario in which the modified information is specific to a service transmitted by using existing channel information within a short time, in a process in which the UE enters the connected mode by using the paging procedure, additional signaling overheads are caused, and signaling overheads of an air interface are increased.

EP2696610A2 describes a method for handling a failure of a mobility management device in an ISR activated scenario. In step 206, the SGSN sends a modify bearer request (Modify Bearer Request) message to the S-GW. In step 207, The S-GW continues to maintain ISR according to the ISR activated indication.

US20140126448A1 describes an additional explicit saving mode for UE device, which enables the network to minimize the processing and context state for that UE, for example by suspending bearer processing among mobile core network elements.

### SUMMARY

Embodiments of the present invention provide a method for processing information or a message, and a network device, to reduce signaling overheads for paging UE, and reduce signaling overheads of an air interface.

To achieve the foregoing objective, the following technical solutions are used in the embodiments of the present invention:
According to a first aspect of this application, this application provides a method for processing information, where the information is information about UE in an idle mode. The method is applied to a first network device, and the method specifically includes: receiving, by a first network device, a first message from a second network device, wherein the first message comprises first information of user equipment, UE; if the UE is in an idle mode, determining, by the first network device, that a processing manner of the first message is delayed processing; storing , by the first network device, the first message, without paging the UE; when the UE enters a connected mode, sending, by the first network device, the first information to the UE.

In a possible implementation, the first information comprises bearer context information of the UE.

In a possible implementation, the determining that a processing manner of the first message is delayed processing comprises: determining, based on processing manner indication information, that the processing manner of the first message is delayed processing; or determining, based on a processing policy, that the processing manner of the first message is delayed processing.

In a possible implementation, the first message comprises the processing manner indication information or the processing policy; and the processing manner indication information is used to indicate delayed processing.

In a possible implementation, in response to the processing manner of the first message is delayed processing, setting, by the first network device, the first message to a wait state, wherein the wait state is used to indicate that the first message is to be processed; and processing, by the first network device, the first message in the wait state when the UE enters the connected mode.

In a possible implementation, the first network device is a control plane, CP, entity, and the second network device is a policy function, PF, entity.

According to a second aspect of this application, this application provides a first network device, characterized by comprising: a receiving unit, configured to receive a first message from a second network device, wherein the first message comprises first information of user equipment, UE; a determining unit, configured to determine a processing manner of the first message received by the receiving unit if the UE is in an idle mode; a storage unit, configured to: in response to the determining unit determines that the processing manner of the first message received by the receiving unit is delayed processing, store the first message received by the receiving unit without paging the UE; a sending unit, configured to send, when the UE enters a connected mode, the first information to the UE.

In a possible implementation, the first information comprises bearer context information of the UE.

In a possible implementation, the determining unit is further configured to: determine, based on processing manner indication information, that the processing manner of the first message received by the receiving unit is delayed processing; or determine, based on a processing policy, that the processing manner of the first message received by the receiving unit is delayed processing.

In a possible implementation, the first message received by the receiving unit comprises the processing manner indication information or the processing policy; and the processing manner indication information is used to indicate delayed processing.

In a possible implementation, the first network device further comprises a setting unit and a processing unit, the setting unit is configured to: in response to the determining unit determines that the processing manner of the first message is delayed processing, set the first message stored by the storage unit to a wait state, wherein the wait state is used to indicate that the first message stored by the storage unit is to be processed; and the processing unit, is configured to: process the first message in the wait state that is stored by the storage unit when the UE enters the connected mode.

In a possible implementation, the first network device is a control plane, CP, entity, and the second network device is a policy function, PF, entity.

According to a third aspect of this application, this application provides a system, characterized by comprising: the first network device according to the second aspect; and a second network device, configured to send a first message to the first network device.

According to a fourth aspect of this application, this application provides a computer readable storage medium, configured to store program code, and the program code includes an instruction for performing the method described in the first aspect.

### BRIEF DESCRIPTION OF DRAWINGS

To describe the technical solutions in the embodiments of the present invention more clearly, the following briefly describes the accompanying drawings required for describing the embodiments. Apparently, the accompanying drawings in the following description show merely some embodiments of the present invention, and persons of ordinary skill in the art may still derive other drawings from these accompanying drawings without creative efforts.
FIG. 1 is a schematic architectural diagram of a communications network according to an embodiment of the present invention;
FIG. 2 is a schematic architectural diagram of an EPS network according to an embodiment of the present invention;
FIG. 3 is a schematic architectural diagram of a 5G network according to an embodiment of the present invention;
FIG. 4 is a schematic structural diagram of a first network device according to an embodiment of the present invention;
FIG. 5 is a schematic structural diagram of a second network device according to an embodiment of the present invention;
FIG. 6 is a schematic flowchart of a method for processing information according to an embodiment of the present invention;
FIG. 7 is a schematic flowchart of another method for processing information according to an embodiment of the present invention;
FIG. 8 is a schematic flowchart of still another method for processing information according to an embodiment of the present invention;
FIG. 9 is a schematic flowchart of a method for processing a message according to an embodiment of the present invention;
FIG. 10 is a schematic flowchart of another method for processing information according to an embodiment of the present invention;
FIG. 11 is a schematic flowchart of still another method for processing information according to an embodiment of the present invention;
FIG. 12 is a schematic flowchart of yet another method for processing information according to an embodiment of the present invention;
FIG. 12a is a schematic flowchart of yet another method for processing information according to an embodiment of the present invention;
FIG. 13 is a schematic flowchart of another method for processing a message according to an embodiment of the present invention;
FIG. 14 is a schematic flowchart of still another method for processing a message according to an embodiment of the present invention;
FIG. 15 is a schematic structural diagram of another first network device according to an embodiment of the present invention;
FIG. 16 is a schematic structural diagram of still another first network device according to an embodiment of the present invention;
FIG. 17 is a schematic structural diagram of yet another first network device according to an embodiment of the present invention;
FIG. 18 is a schematic structural diagram of another first network device according to an embodiment of the present invention;
FIG. 19 is a schematic structural diagram of another first network device according to an embodiment of the present invention;
FIG. 20 is a schematic structural diagram of another first network device according to an embodiment of the present invention;
FIG. 21 is a schematic structural diagram of another first network device according to an embodiment of the present invention;
FIG. 22 is a schematic structural diagram of another second network device according to an embodiment of the present invention; and
FIG. 23 is a schematic structural diagram of still another second network device according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by persons of ordinary skill in the art based on the embodiments of the present invention without creative efforts shall fall within the protection scope of the present invention.

In addition, the terms "system" and "network" may often be used interchangeably in this specification. The term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

Currently, when a control plane network device in a communications network receives information about UE or a message of UE, if the UE is in an idle mode, a paging message is sent to the UE, to wake up the UE to enter a connected mode, to send the information about the UE to the UE or process a message including the information about the UE. This process causes UE to generate additional signaling overheads, and signaling overheads of an air interface are wasted.

A basic principle of the present invention is as follows: When information about UE or a message including information about UE is received, a sending manner of the information about the UE or a processing manner of the message including the information about the UE is determined first, where the sending manner includes immediate sending, delayed sending, or delayed and scheduled sending, and the processing manner includes immediate processing or delayed processing or delayed and scheduled processing; and the information is sent to the UE based on the determined sending manner, or the message is processed based on the determined processing manner. Therefore, when information that does not need to be immediately sent or a message that does not need to be immediately processed is received, UE in an idle mode does not need to be paged, thereby reducing signaling overheads for paging the UE, and reducing signaling overheads of an air interface.

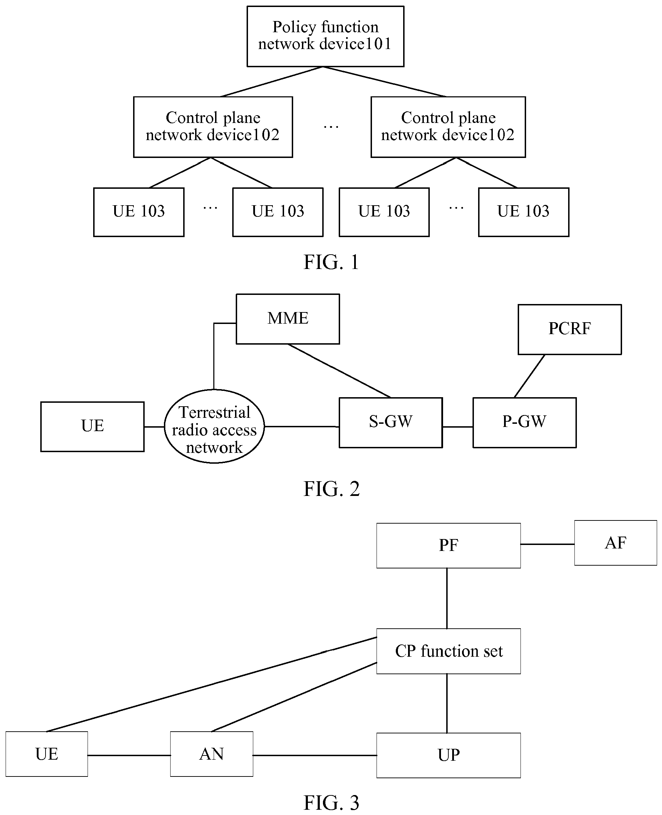

A method for processing information or a message provided in an embodiment of the present invention is applied to a communications network architecture shown in FIG. 1 or an evolved packet system (English full name: Evolved Packet System, EPS) network architecture shown in FIG. 2.

The communications network architecture shown in FIG. 1 includes a policy function network device 101, at least one control plane network device 102, and at least one UE 103.

In the communications network architecture shown in FIG. 1, the policy function network device 101 is connected to the at least one control plane network device 102 to perform communication, and one control plane network device 102 serves a plurality of UEs 103.

It should be noted that, quantities of policy function network devices 101, control plane network devices 102, and UEs 103 that are included in the communications network architecture may be determined according to an actual requirement. This is not specifically limited in this embodiment of the present invention. FIG. 1 merely describes the constitution of the communications network architecture by using an example, and is not intended to specifically limit the quantities of policy function network devices 101, control plane network devices 102, and UEs 103 that are included in the communications network architecture.

The EPS network architecture shown in FIG. 2 includes a packet data gateway (English full name: Public Data Network Gateway, P-GW) and a mobility management entity (English full name: Mobility Management Entity, MME). The P-GW obtains a policy from a policy and charging rules function (English full name: Policy and Charging Rules Function, PCRF), and the P-GW communicates with the MME by using a serving gateway (English full name: Serving GateWay, S-GW).

Optionally, the communications network architecture shown in FIG. 1 may be a network architecture of a fifth generation mobile communications technology (English full name: 5th-Generation, 5G) network. FIG. 3 schematically shows a network architecture of a 5G network. In the network architecture of the 5G network shown in FIG. 3, a policy function (English full name: Policy Function, PF) entity is a policy function network device, and a control plane (English full name: Control Plane, CP) functional unit set is a control plane network device.

The CP functional unit set may be at least one CP entity. When the CP functional unit set includes at least two CP entities, and the at least two CP entities interact to implement a function of a first network device in this embodiment of the present invention.

For example, the CP functional unit set may include a mobility management (English full name: Mobility Management, MM) function and a session management (English full name: Session Management, SM) function.

Certainly, the method for processing information or a message provided in this embodiment of the present invention is applicable to various communications network architectures. Therefore, the communications network architecture shown in FIG. 1 may also be another communications network architecture, and a type of the communications network architecture shown in FIG. 1 is not specifically limited in this embodiment of the present invention.

Optionally, the UE 103 may be a terminal device such as a mobile phone, a tablet computer, a notebook computer, a personal computer (English full name: personal computer, PC), an ultra-mobile personal computer (English full name: Ultra-mobile Personal Computer, UMPC), a netbook, a personal digital assistant (English full name: Personal Digital Assistant, PDA), or an in-vehicle device.

The method for processing information or a message provided in this embodiment of the present invention is specifically applied to a first network device 40 or a second network device 50. The first network device 40 may be the policy function network device 101 in the communications network architecture shown in FIG. 1, and the second network device 50 may be the control plane network device 102.

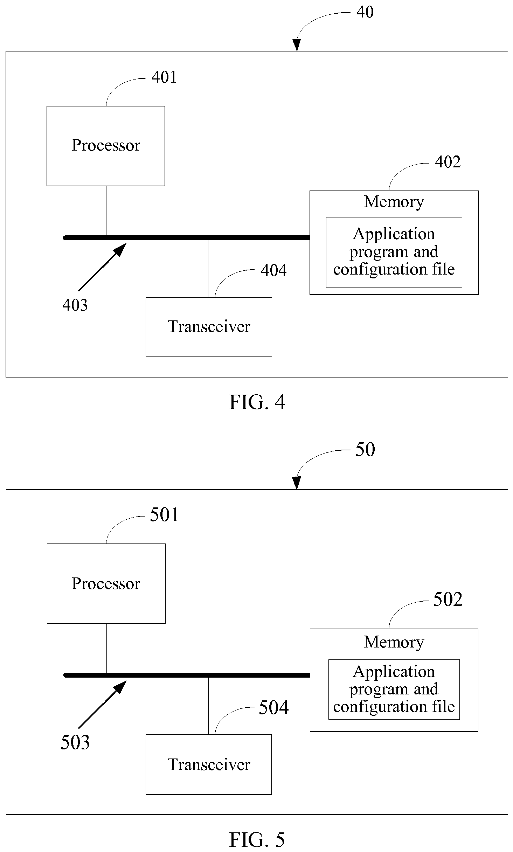

Specifically, FIG. 4 is a schematic structural diagram of the first network device 40 related to various embodiments of the present invention. The first network device 40 performs a control and management function.

As shown in FIG. 4, the first network device 40 may include a processor 401, a memory 402, a communications bus 403, and a transceiver 404.

The memory 402 is configured to store program code, so that the processor 401 executes the program code to implement various functions of the first network device 40. The memory 402 may be a volatile memory (volatile memory) such as a random access memory (English full name: random-access memory, RAM); or a non-volatile memory (English full name: non-volatile memory) such as a read-only memory (English full name: read-only memory, ROM), a flash memory (English full name: flash memory), a hard disk drive (English full name: hard disk drive, HDD), or a solid-state drive (English full name: solid-state drive, SSD); or a combination of the foregoing types of memories.

The processor 401 is a control center of the first network device 40, and may be a central processing unit (English full name: central processing unit, CPU), or may be an application-specific integrated circuit (English full name: Application Specific Integrated Circuit, ASIC), or one or more integrated circuits configured to implement the embodiments of the present invention, for example, one or more microprocessors (English full name: digital signal processor, DSP) or one or more field programmable gate arrays (English full name: Field Programmable Gate Array, FPGA). The processor 401 may run or execute the program code stored in the memory 402, and invoke data stored in the memory 402, to implement various functions of the first network device 40.

The communications bus 403 may be an industry standard architecture (English full name: Industry Standard Architecture, ISA) bus, a peripheral component interconnect (English full name: Peripheral Component interconnect, PCI) bus, an extended industry standard architecture (English full name: Extended Industry Standard Architecture, EISA) bus, or the like. The bus 403 may be classified into an address bus, a data bus, a control bus, and the like. For ease of representation, only one thick line is used to represent the bus in FIG. 4, but this does not mean that there is only one bus or only one type of bus.

The first network device 40 may communicate with another network device by using the transceiver 404. The transceiver 404 may be a transceiver port, namely, a communications interface.

Specifically, FIG. 5 is a schematic structural diagram of the second network device 50 related to various embodiments of the present invention. The second network device 50 performs a policy function.

As shown in FIG. 5, the second network device 50 may include a processor 501, a memory 502, a communications bus 503, and a transceiver 504.

The memory 502 is configured to store program code, so that the processor 501 executes the program code to implement various functions of the second network device 50. The memory 502 may be a volatile memory such as a RAM; or a non-volatile memory such as a ROM, a flash memory, an HDD, or an SSD; or a combination of the foregoing types of memories.

The processor 501 is a control center of the second network device 50, and may be a CPU, or may be an ASIC, or one or more integrated circuits configured to implement the embodiments of the present invention, for example, one or more DSPs or one or more FPGAs. The processor 501 may run or execute the program code stored in the memory 502, and invoke data stored in the memory 502, to implement various functions of the second network device 50.

The communications bus 503 may be an ISA bus, a PCI bus, an EISA bus, or the like. The bus 503 may be classified into an address bus, a data bus, a control bus, and the like. For ease of representation, only one thick line is used to represent the bus in FIG. 5, but this does not mean that there is only one bus or only one type of bus.

The second network device 50 may communicate with another network device by using the transceiver 504. The transceiver 504 may be a transceiver port.

The embodiments of the present invention are described in detail below with reference to the accompanying drawings.

Before the specific solutions in the embodiments of the present invention are described, concepts of sending manners related to the embodiments of the present invention are explained first.

Immediate sending means that when information about UE is received, if the UE is in a connected mode, the information is directly sent to the UE; or if the UE is an idle mode, the UE is paged, and the information is sent after the UE enters a connected mode.

Delayed sending means that when information about UE is received, if the UE is in a connected mode, the information is directly sent; or if the UE is an idle mode, the information is sent after the UE enters a connected mode.

Delayed and scheduled sending means that when information about UE is received, if the UE is in a connected mode, the information is directly sent; or if the UE is in an idle mode, and the UE enters a connected mode before a predetermined time point, the information is sent after the UE enters the connected mode; or if the UE is in an idle mode, and the UE does not enter a connected mode after a predetermined time point, the UE is paged, and the information is sent after the UE enters the connected mode.

Immediate processing means that when a message including information about UE is received, if the UE is in a connected mode, the message is directly processed; or if the UE is in an idle mode, the UE is paged, and the message is processed after the UE enters a connected mode.

Delayed processing means that when a message including information about UE is received, if the UE is in a connected mode, the message is directly processed; or if the UE is in an idle mode, the message is processed after the UE enters a connected mode.

Delayed and scheduled processing means that when a message including information about UE is received, if the UE is in a connected mode, the message is directly processed; or if the UE is in an idle mode, and the UE enters a connected mode before a predetermined time point, the message is processed after the UE enters the connected mode; or if the UE is in an idle mode, and the UE does not enter a connected mode after a predetermined time point, the UE is paged, and the message is processed is performed after the UE enters the connected mode.

It should be noted that, the processing mentioned above may include sending, conversion, or an update of a message or information.

According to an aspect, an embodiment of the present invention provides a method for processing information. The method is applied to the communications network architecture shown in FIG. 1 or the EPS network architecture shown in FIG. 2. In this embodiment, a process of interaction between a first network device and a second network device is used as an example to describe the method for processing information provided in this embodiment of the present invention.

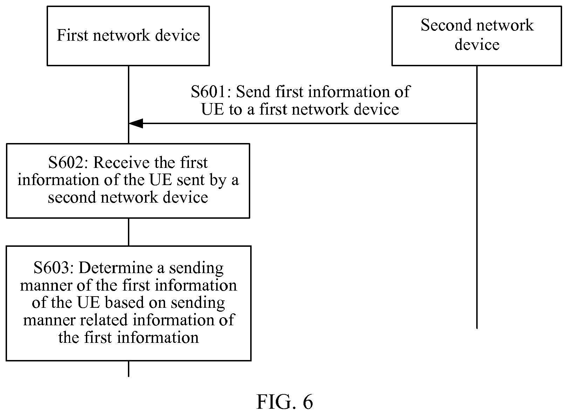

As shown in FIG. 6, the method may include the following steps.

S601: The second network device sends first information of UE to the first network device.

It should be noted that, the first information of the UE may be any type of information. This is not specifically limited in this embodiment of the present invention.

For example, the first information of the UE may be information synchronized or updated to the UE in a session management procedure, for example, bearer context information. To be specific, when a network side initiates an update of session information or an update of bearer information, the UE needs to be notified of the updated information. Alternatively, the first information may be an update of subscription information of the UE or an update of related information of the UE initiated by a home subscriber server (English full name: Home Subscriber Server, HSS) or an update of information about the UE initiated by another network side device. Certainly, a type and a form of the first information of the UE are not specifically limited in this embodiment of the present invention.

The information synchronized or updated to the UE in the session management procedure includes information, synchronized to the UE, about a modified, created, or deleted session parameter after the session parameter is modified, created, or deleted, so that a newest session parameter is synchronized to the UE; or attribute information, synchronized to the UE, of a modified or set up or deleted bearer after the bearer in a session is modified or set up or deleted.

Specifically, the information synchronized or updated to the UE in the session management procedure specifically includes: a modification of a bearer quality of service (English full name: Quality of Service, QoS) parameter or a per APN aggregate maximum bit rate (Access Point Network-Aggregated Maximum Bit Rate, APN-AMBR) or a bearer traffic flow template (English full name: Traffic Flow Template, TFT) information or a notification protocol configuration option (English full name: Protocol Configuration Options, PCO) or the like.

Parameter information may be parameter content, or may be an information value corresponding to parameter content. A correspondence between parameter content and an information value may be set according to an actual requirement. This is not specifically limited in this embodiment of the present invention.

For example, bearer attribute information may include a quality of service (English full name: Quality of Service, QoS) parameter. The QoS parameter may include a QoS class identifier (English full name: QoS Class Identifier, QCI), the Address Resolution Protocol (English full name: Address Resolution Protocol, ARP), a guaranteed bit rate (English full name: Guaranteed Bit Rate, GBR), and a multiple frequency band indicator (English full name: multi-band-radio, MBR).

Optionally, when sending the first information of the UE to the first network device in S601, the second network device may further send sending manner related information of the first information to the first network device. In other words, the first information and the sending manner related information of the first information may be sent to the first network device by using a first message.

The sending manner related information of the first information may include sending manner indication information or a sending policy.

The sending manner indication information is used to indicate a sending manner of the first information. The sending policy is used to determine a sending manner of the first information of the UE. The sending manner includes immediate sending, delayed sending, or delayed and scheduled sending.

Optionally, the sending policy may include different sending manners corresponding to different types of services; or different sending manners corresponding to modifications of different types of objects, where for example, an immediate sending manner is used for a modification of a guaranteed bit rate bearer, and delayed sending is used for a modification or a setup of a non-guaranteed bit rate bearer; and the method may further include activating of the delayed sending feature when a network side is congested. Specific content of the sending policy is not limited in this embodiment of the present invention, and the content of the sending policy may be defined according to an actual requirement.

Optionally, the sending policy may include: for a service with a specific execution moment, related information of the service is sent to the UE in a delayed and scheduled sending manner. The sending policy may further include a time point or a time length at which/during which the related information of the service is sent to the UE. For example, the time point at which the related information of the service is sent to the UE is determined based on the specific execution moment of the service.

For example, in the session management procedure, the sending policy may be different sending manners corresponding to different subscription information or different information attributes. The sending manner can be determined based on information about the UE or a subscription level of the UE.

It should be noted that, if the second network device sends the first information of the UE and the sending manner related information of the first information to the first network device, the first information and the sending manner related information of the first information may be included in one message for sending, or may be carried in different messages for sending. This is not specifically limited in this embodiment of the present invention.

Correspondingly, if the second network device further sends the sending manner related information of the first information to the first network device when sending the first information of the UE to the first network device in S601, before S601, the method further includes: obtaining, by the second network device, the sending manner related information of the first information of the UE.

Optionally, there are a plurality of implementations of obtaining the sending policy by the second network device, and the plurality of implementations specifically include, but are not limited to, the following:
Manner 1: A sending policy preconfigured by an operator is received.

In Manner 1, the operator may configure the sending policy on the second network device.

Manner 2: A sending policy is determined based on a current network condition.

In Manner 2, the second network device may determine the sending policy based on an actual network status.

For example, the sending policy may include: in a busy network, a delayed sending manner or a delayed and scheduled sending manner is used to send information whose survival time needs to be less than a first threshold; and an immediate sending manner is used to send information whose survival time needs to be greater than the first threshold; or in an idle network, all information is immediately sent.

It should be noted that, the foregoing example is merely an example for describing the sending policy, and is not intended to limit the specific content of the sending policy.

Manner 3: A sending policy configured by an operator is received, and the sending policy is dynamically adjusted based on a current network condition.

Further, the obtaining, by the second network device, the sending manner indication information of the first information includes: determining the sending manner of the first information based on the sending policy, and generating the sending manner indication information of the first information.

The sending manner indication information may include indication information of immediate sending, indication information of delayed sending, or indication information of delayed and scheduled sending.

It should be noted that, a representation form of the sending manner indication information may be set according to an actual requirement. This is not specifically limited in this embodiment of the present invention.

For example, different sending manner indication information may be represented by using different characters, or different sending manners may be represented by determining whether the sending manner indication information is empty.

For example, a sending manner indication information flag bit is set. If the flag bit is set to 1, it indicates immediate sending; if the flag bit is set to 2, it indicates delayed sending; or if the flag bit is set to 3, it indicates delayed and scheduled sending.

For another manner, immediate sending may be implemented by using a synchronization indication (synchronization indication), and delayed sending or delayed and scheduled sending may be implemented by using an asynchronization indication (asynchronization indication). Based on the asynchronization indication, delayed and scheduled sending may further be determined by determining whether the second network device delivers time indication information. For example, if the second network device delivers the time indication information, it indicates that the delayed and scheduled sending manner is used.

Apparently, the synchronization indication and the asynchronization indication each may be implemented by using one bit. This is not limited.

Further, when the sending manner is the delayed and scheduled sending manner, the indication information may further include time information. The time information may be a time point at which the first information needs to be synchronized.

For example, it may be determined, based on the flag bit of 2 and the time information, that the sending manner is delayed and scheduled sending.

Further, if the second network device determines, based on the sending policy, that the sending manner of the first information of the UE is delayed and scheduled sending, the sending manner related information of the first information may further include a preset time point of the first information of the UE.

Specifically, a specific implementation of S601 may be: sending, by the first network device to the second network device, a first message carrying the first information of the UE. Optionally, the first message may further carry the sending manner related information of the first information.

S602: The first network device receives the first information of the UE sent by the second network device.

Further, if the second network device further sends the sending manner related information of the first information when sending the first information of the UE to the first network device, S602 further includes: receiving, by the first network device, the sending manner related information of the first information of the UE sent by the second network device.

Specifically, S602 includes: receiving, by the first network device, the first message sent by the second network device, where the first message carries the first information of the UE.

Further, the first message may carry the sending manner related information of the first information.

Optionally, if the UE is in an idle mode, S603 is performed.

S603: The first network device determines a sending manner of the first information of the UE based on sending manner related information of the first information.

Step S603 is performed when the UE is in the idle mode.

The sending manner related information of the first information may be sent by the second network device in S601.

When the sending manner related information of the first information includes the sending policy, the sending manner related information may also be stored in the first network device. This is not specifically limited in this embodiment of the present invention.

Specifically, a solution of performing S603 varies with different content included in the sending manner related information of the first information.

When the sending manner related information of the first information includes the sending manner indication information of the first information, S603 is specifically performed as: determining that the sending manner of the first information is the sending manner indicated by the sending manner indication information; or
when the sending manner related information of the first information includes the sending policy, S603 is specifically performed as: determining the sending manner of the first information based on the sending policy.

It should be noted that, a specific process of determining the sending manner of the first information based on the sending policy is already described in S601, and details are not described herein again.

According to the method for processing information provided in this application, the UE is in the idle mode, and when receiving the first information of the UE in the idle mode that is sent by the second network device, the first network device determines the sending manner of the first information based on the sending manner related information of the first information, and determines whether to immediately send the first information to the UE. When the determined sending manner is delayed sending or delayed and scheduled sending, the UE in the idle mode does not need to be immediately paged and waken up to receive the first information, thereby reducing signaling overheads for paging the UE, and reducing signaling overheads of an air interface.

Optionally, S602 includes: receiving, by the first network device, the first message sent by the second network device, where the first message carries the first information and the sending manner related information of the first information.

After S603, the method further includes:
if the sending manner of the first information is delayed sending or delayed and scheduled sending, setting the first message to a wait state; or
if the sending manner of the first information is immediate sending, sending a paging message to the UE; and sending the first information to the UE when the UE enters a connected mode.

Further, after the setting the first message to a wait state, the method may include:
if the sending manner of the first information is delayed sending or delayed and scheduled sending and the first message is in the wait state, processing the first message when the UE enters the connected mode; or if the sending manner of the first information is delayed and scheduled sending and the first message is in the wait state, processing the first message when the preset time point of the first message is reached.

For example, the processing the first message may include: sending the first information to the UE; or encapsulating the first information in the first message into a second message, and sending the second message to the UE; or processing the first information and sending processed information as second information to the UE. This is not limited.

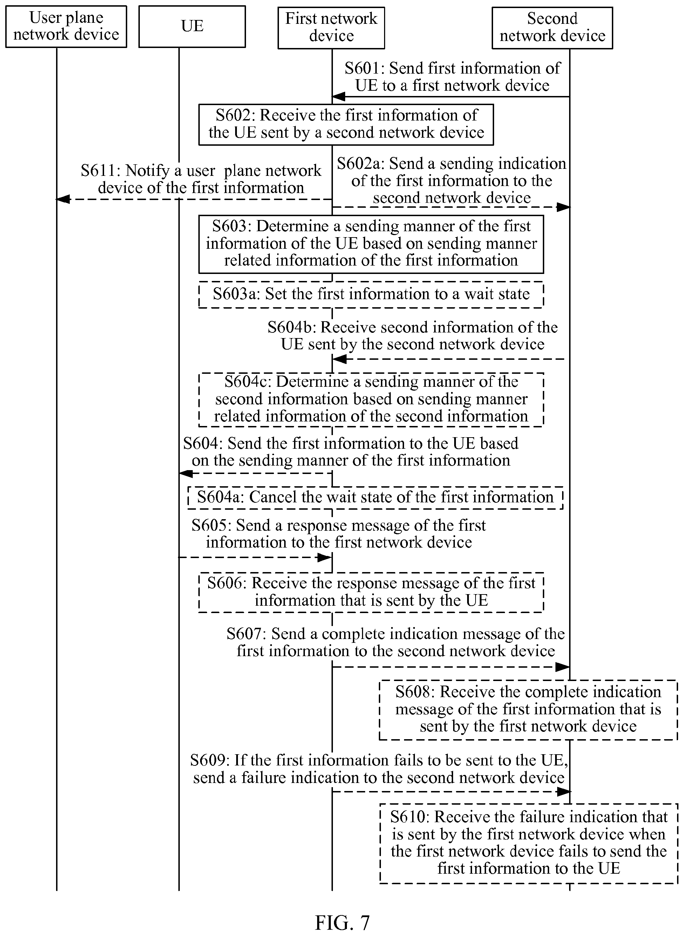

Optionally, as shown in FIG. 7, after S603, the method may further include the following step:
S604: The first network device sends the first information to the UE based on the sending manner of the first information.

When the first network device sends the first information to the UE, the first information may be included in a message for sending. A type of the message is not specifically limited in this embodiment of the present invention.

For example, in the session management procedure, when the network side modifies session information of the UE, the first network device needs to send modified session information to the UE, to be specific, add the first information to a session management request and send the session management request.

For example, the first information that may be included in the session management request is context information corresponding to at least one communications link in a session set up between the UE and a network, for example, updated QoS information, traffic flow information, or an APN-AMBR.

Specifically, in S604, a process in which the first network device sends the first information to the UE based on the sending manner first information varies with different sending manners of the first information that are determined by the first network device. The following three cases may be specifically included:
Case 1: The sending manner of the first information of the UE is delayed sending.

In Case 1, a specific implementation of the sending, by the first network device, the first information to the UE based on the sending manner of the first information may be:
sending the first information to the UE when the UE enters the connected mode.

Case 2: The sending manner of the first information of the UE is delayed and scheduled sending.

In Case 2, a specific implementation of the sending, by the first network device, the first information to the UE based on the sending manner of the first information may be:
sending the first information to the UE when the UE enters the connected mode or the preset time point of the first information is reached.

In Case 2, the sending the first information to the UE when the UE enters the connected mode specifically includes:
if the UE enters the connected mode before the preset time point of the first information is reached, sending the first information to the UE when the UE enters the connected mode.

Further optionally, the following two implementations may be included for the preset time point of the first information:
First implementation: The sending manner related information of the first information includes the preset time point of the first information.
Second implementation: Upon reception of the first information, a timer starts timing, and when the timer expires, the preset time point of the first information is reached.

Currently, the preset time point of the first information may be implemented in a manner other than the foregoing two implementations. This is not specifically limited in this embodiment of the present invention.

Case 3: The sending manner of the first information of the UE is immediate sending.

In Case 3, a specific implementation of the sending, by the first network device, the first information to the UE based on the sending manner of the first information of the UE may be:
after determining the sending manner of the first information of the UE, immediately sending a paging message to the UE, and sending the first information to the UE when the UE enters the connected mode.

Further, in each of the foregoing three cases, the first information is sent to the UE when the UE enters the connected mode. An implementation process of sending the first information to the UE when the UE enters the connected mode is described below and is applicable to any one of the foregoing three cases.

Specifically, that the UE enters the connected mode is determined in a plurality of manners, and any method that can be used to determine that the UE enters the connected mode is applicable to this embodiment of the present invention. This is not specifically limited in this embodiment of the present invention.

Several implementation processes of sending the first information to the UE when the UE enters the connected mode are described in detail below.

### First implementation process:

A location update request sent by the UE is received, where the location update request carries object information of the UE; and the first information is sent to the UE based on the object information.

The object information of the UE includes an identifier of an object related to the UE and a current status (active or inactive) of the object. An object to which the first information belongs is a subject reflected by the first information, and the first information is attribute information of the object to which the first information belongs.

For example, in the session management procedure, an object is a session or an object is a bearer included in a session.

Specifically, the sending the first information to the UE based on the object information specifically includes:
determining, based on the object information, whether the object to which the first information belongs is in the active state or is a newly created object; and sending the first information to the UE if the object to which the first information belongs is in the active state or is a newly created object.

Further, the determining, based on the object information, whether the object to which the first information belongs is in the active state specifically includes:
searching the object information for the current status of the object to which the first information belongs, to determine whether the object to which the first information belongs is in the active state.

Further, the determining, based on the object information, whether the object to which the first information belongs is a newly created object specifically includes:
searching the object information, where if the object information does not include the object to which the first information belongs, the object to which the first information belongs is a newly created object; otherwise, the object to which the first information belongs is not a newly created object.

Further, in the first implementation process, a process of sending the first information to the UE may be specifically implemented in the following two manners:
Manner A: A location update response message is sent to the UE, where the location update response message includes the first information.

In Manner A, after the first network device sends, to the UE, the location update response message including the first information, the UE sends, to the first network device, a location update complete message including a session management response. The location update complete message including the session management response is used as a response message of the first information.

Manner B: A context setup message including the first information is sent to an access network device, so that the access network device sends, to the UE, an RRC reconfiguration message including the first information.

A location update response message is further sent to the UE.

In Manner B, after receiving the context setup message including the first information, the access network device sends, to the UE, the RRC reconfiguration message including the first information. Then, the UE sends, to the access network device, a reconfiguration message including a response message of the first information. Next, the access network device sends, to the first network device, a context setup response message including the response message of the first information.

It should be noted that, whether the first information is sent to the UE in Manner A or Manner B may be determined according to an actual requirement. This is not specifically limited in this embodiment of the present invention.

### Second implementation process:

A service request sent by the UE is received, where the service request carries object information of the UE; and the first information is sent to the UE based on the object information.

It should be noted that, the sending the first information to the UE based on the object information is already described in detail in the foregoing first implementation process, and details are not described herein again.

It should be noted that, when the first network device sends the first information to the UE, if an information mode between the first network device and the UE is different from an information mode between the first network device and the second network device, the first information is converted and then sent based on a mapping relationship between the two information modes. Any manner of notifying the UE of the first information falls within the protection scope of the present invention.

Optionally, as shown in FIG. 7, after S603, if the sending manner of the first information is delayed sending or delayed and scheduled sending, the method may further include the following step:
S603a: The first network device sets the first information to a wait state.

The wait state is used to indicate that the first information is to be sent.

An implementation of the setting the first information to a wait state may be: setting an identifier to record the wait state; or may be: storing the first information into a buffer to record the wait state.

Optionally, the object to which the first information belongs may be set to the wait state, to set the first information to the wait state. Alternatively, a message in which the first information is located may be set to the wait state, to set the first information to the wait state.

Further, if the method includes S603a, S604 may be implemented as:
if the sending manner of the first information is delayed sending or delayed and scheduled sending and the first information is in the wait state, sending the first information to the UE when the UE enters the connected mode; or if the first information of the sending manner is delayed and scheduled sending and the first information is in the wait state, sending the first information to the UE when the preset time point of the first information is reached.

Corresponding to S603a, as shown in FIG. 7, after the first network device sends the first information to the UE in S604, the method may further include the following step:
S604a: The first network device cancels the wait state of the first information.

If the implementation of the setting the first information to a wait state is setting an identifier to record the wait state, the canceling the wait state of the first information is deleting the specified identifier or modifying an identifier to cancel the wait state. If the implementation of the setting the first information to a wait state is storing the first information into a particular buffer, the canceling the wait state of the first information is deleting the first information from the buffer after the first information is sent to the UE.

Optionally, as shown in FIG. 7, before the first information is sent to the UE in S604, the method may further include the following step:
S604b: The first network device receives second information of the UE sent by the second network device.

It should be noted that, S604b is the same as S602, and details are not described herein again.

Further, as shown in FIG. 7, after S604b, the method includes the following step:
S604c: The first network device determines a sending manner of the second information based on sending manner related information of the second information.

It should be noted that, S604c is the same as S603, and details are not described herein again.

Further, if the method for processing information provided in this embodiment of the present invention includes S604b and S604c, a specific implementation of the sending the first information to the UE in S604 is as follows:
If the first information and the second information belong to a same object, the first information to be sent is deleted, and only the second information is sent to the UE. A specific sending manner is the sending manner of the second information.

If the first information and the second information belong to different objects, the first information and the second information need to be sent to the UE. The sending manners of the first information and the second information are as follows:
If the sending manners of the first information and the second information are both delayed sending, the sending manners are delayed sending; if the sending manners of the first information and the second information include delayed sending and delayed and scheduled sending, the sending manners are delayed and scheduled sending; or if the sending manners of the first information and the second information are both delayed and scheduled sending, the sending manners are delayed and scheduled sending, and sending is performed based on a time point that is first reached.

An implementation of the sending the first information and the second information to the UE may be: adding the first information and the second information to one message and sending the message to the UE.

It should be noted that, if the first network device receives a plurality of pieces of information of the UE before sending the first information, a processing process is the same as the foregoing processing process when the second information is received, and details are not described herein again.

Optionally, as shown in FIG. 7, after S602, the method may further include the following step:
S602a: The first network device sends a sending indication of the first information to the second network device.

Optionally, the sending indication of the first information is used to indicate the sending manner of the first information that is determined by the first network device.

Optionally, the sending indication of the first information may be included in the response message of the first information and sent to the second network device.

Optionally, as shown in FIG. 7, after the first information is sent to the UE in S604, the method may further include S605 and S606.

S605: The UE sends a response message of the first information to the first network device.

The response message of the first information is used to notify the first network device that the UE already receives the first information.

S606: The first network device receives the response message of the first information that is sent by the UE.

Optionally, as shown in FIG. 7, after S606, the method may further include S607 and S608.

S607: The first network device sends a complete indication message of the first information to the second network device.

S608: The second network device receives the complete indication message of the first information that is sent by the first network device.

Optionally, as shown in FIG. 7, after the first information is sent to the UE in S604, the method may further include the following steps:
S609: If the first network device fails to send the first information to the UE, the first network device sends a failure indication to the second network device.

S610: The second network device receives the failure indication that is sent by the first network device when the first network device fails to send the first information to the UE.

Optionally, as shown in FIG. 7, after S602, the method may further include the following step:
S611: The first network device notifies a user plane network device of the first information.

It should be noted that, S611 only needs to be performed after S602, and a specific execution sequence of S611 is not specifically limited in this embodiment of the present invention.

It should further be noted that, an execution sequence of the steps in the method for processing information provided in this embodiment of the present invention may be set according to an actual requirement. FIG. 6 and FIG. 7 each merely schematically show an execution sequence of the steps in the method for processing information provided in this embodiment of the present invention, and are not intended to impose a specific limitation.

According to another aspect, an embodiment of the present invention provides another method for processing information. The method is applied to the communications network architecture shown in FIG. 1 or the EPS network architecture shown in FIG. 2. In this embodiment, a process of interaction between a first network device and a second network device is used as an example to describe the method for processing information provided in this embodiment of the present invention.

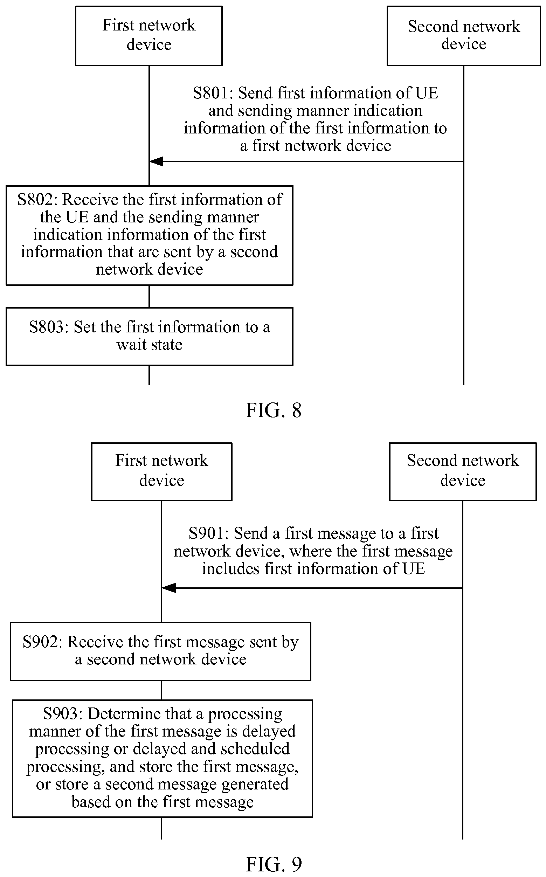

As shown in FIG. 8, the method may include the following steps.

S801: The second network device sends first information of UE and sending manner indication information of the first information to the first network device.

It should be noted that, the sending manner indication information of the first information is already described in detail in the foregoing embodiment, and details are not described herein again.

S802: The first network device receives the first information of the UE and the sending manner indication information of the first information that are sent by the second network device.

Specifically, if the UE is an idle mode, and the sending manner indication information indicates that send the first information in a delayed sending manner or a delayed and scheduled sending manner, S803 is performed.

S803: The first network device sets the first information to a wait state.

The wait state is used to indicate that the first information is to be sent.

According to the method for processing information provided in this application, when sending the first information of the UE in the idle mode to the first network device, the second network device also provides the sending manner indication information of the first information; and if the sending manner indication information indicates that send the first information in the delayed sending manner or the delayed and scheduled sending manner, the first network device sets the first information to the wait state, without immediately paging and waking up the UE in the idle mode to receive the first information, thereby reducing signaling overheads of the UE, and reducing signaling overheads of an air interface.

Further, after S803, the method may include:
sending the first information to the UE when the UE enters a connected mode and the first information is in the wait state; or
sending the first information to the UE when a preset time point of the first information is reached and the first information is in the wait state.

It should be noted that, a process of sending the first information to the UE when the UE enters the connected mode and a process of sending the first information to the UE when the preset time point of the first information is reached are already described in detail in the foregoing embodiment, and details are not described herein again.

It should be noted that, the first information of the UE in the embodiment shown in FIG. 8 is the same as the first information of the UE in the embodiment shown in FIG. 6 or FIG. 7, and for another process that is not described in the method for processing information shown in FIG. 8, refer to the processes and the steps described in FIG. 6 or FIG. 7, and details are not described herein again.

It should be noted that, a process of processing the first information of the UE is described in FIG. 6, FIG. 7, and FIG. 8. Generally, the first information is included in a message and sent by the second network device to the first network device. Therefore, in this embodiment of the present invention, the message including the first information may be processed. Related descriptions are provided in the following embodiment.

According to another aspect, an embodiment of the present invention provides a method for processing a message, applied to the communications network architecture shown in FIG. 1 or the EPS system architecture shown in FIG. 2. In this embodiment, a process of interaction between a first network device and a second network device is used as an example to describe the method for processing a message provided in this embodiment of the present invention.

As shown in FIG. 9, the method may include the following steps.

S901: The second network device sends a first message to the first network device.

It should be noted that, a type of the first message is not specifically limited in this embodiment of the present invention. The first message includes first information of UE. Specifically, for the first information, refer to related descriptions in the embodiment shown in FIG. 6.

Optionally, in a session management procedure, the first message is a session modification request, a bearer modification request, a bearer setup request, or a bearer deletion request. A bearer is context information created by the UE and a network side for data transmission, and may specifically include a bearer identifier, TFT information, a QoS parameter, and the like. Optionally, when sending the first message to the first network device in the S901, the second network device may further send processing manner indication information or a processing policy of the first message to the first network device.

The processing manner indication information is used to indicate a processing manner of the first message. The processing policy is similar to the foregoing sending policy, and details are not described herein again.

Specifically, the first message may carry the processing manner indication information and the first information of the UE. The processing manner indication information may be used to indicate a processing manner of the first information of the UE, and may also be used to indicate the processing manner of the first message. This is not limited herein. The processing manner may be immediate processing, delayed processing, or delayed and scheduled processing.

Immediate processing may be implemented by using a synchronization indication (synchronization indication), and delayed processing or delayed and scheduled processing may be implemented by using an asynchronization indication (asynchronization indication). Further, delayed and scheduled processing may be determined by determining whether the first message carries time related indication information. For example, if the first message carries an asynchronization indication and time indication information, the processing manner of the first message is delayed and scheduled processing. If the first message carries an asynchronization indication and carries no time indication information, the processing manner of the first message is delayed processing. If the first message carries a synchronization indication, the processing manner of the first message is immediate processing.

Apparently, the synchronization indication and the asynchronization indication each may be implemented by using one bit. This is not limited.

In addition, the processing manner may alternatively be indicated by using two bits. For example, 00 indicates immediate processing, 01 indicates delayed sending, and 10 indicates delayed and scheduled sending. Further, refer to related descriptions of the sending manner indication information in the embodiment shown in FIG. 6, and details are not described again.

Optionally, before S901, the method further includes:
determining, by the second network device, the first information of the UE and the processing manner of the first information, and sending the first message to the first network device.

The first message may carry the processing manner indication information and the first information of the UE. The processing manner indication information is used to indicate the processing manner determined in step S901. For example, when a QoS changes and a session parameter changes, or when a session is deleted, the second network device determines to update, to the UE, parameter information that changes. For details, refer to related descriptions in the embodiment shown in FIG. 6, and details are not described again.

Correspondingly, if the second network device further sends the processing manner indication information or the processing policy to the first network device when sending the first message to the first network device in S901, before S901, the method further includes: obtaining, by the second network device, the processing manner indication information or the processing policy of the first message.

The obtaining, by the second network device, the processing manner indication information or the processing policy is similar to the obtaining, by the second network device, the sending manner related information of the first information described in S601, and details are not described herein again.

S902: The first network device receives the first message sent by the second network device.

Optionally, if the UE is in an idle mode, step S903 is performed.

S903: The first network device determines that a processing manner of the first message is delayed processing or delayed and scheduled processing, and stores the first message, or stores a second message generated based on the first message.

Step S903 is performed when the UE is in the idle mode.

The second message generated based on the first message is a second message generated through parsing and encapsulation based on a function and a destination device of the first message after the first message is received.

For example, in the session management procedure, the first message is a session modification request, a bearer modification request, a bearer setup request, or a bearer deletion request including information synchronized or updated to the UE. When receiving the session modification request, the bearer modification request, the bearer setup request, or the bearer deletion request, the first network device performs parsing and encapsulation to generate a session management request or a bearer management related request (modification, setup, or deletion) to be sent to the UE. The session management request or the bearer management related request includes the information synchronized or updated to the UE, and the session management request is the second message generated based on the first message.

Specifically, the determining that a processing manner of the first message is delayed processing or delayed and scheduled processing in S903 may include:
determining, based on the processing manner indication information, that the processing manner of the first message is delayed processing or delayed and scheduled processing; or determining, based on the processing policy, that the processing manner of the first message is delayed processing or delayed and scheduled processing.

It should be noted that, a process of determining, based on the processing manner indication information, that the processing manner of the first message is delayed processing or delayed and scheduled processing, or determining, based on the processing policy, that the processing manner of the first message is delayed processing or delayed and scheduled processing in S903 is similar to a process of determining the sending manner of the first information in S603, and details are not described herein again.

The processing manner indication information may be sent by the second network device in S901. When the sending manner related information of the first information includes the sending policy, the sending manner related information may also be stored in the first network device. This is not specifically limited in this embodiment of the present invention.

Alternatively, S903 may be replaced with:
determining, by the first network device, that the processing manner of the first message is immediate processing, and sending a paging message to the UE.

For example, if the processing manner indicated by the processing manner indication information carried in the first message is immediate processing, the first network device determines that the processing manner of the first message is immediate processing.

According to the method for processing a message provided in this application, the message includes the first information of the UE in the idle mode, and when receiving the first message sent by the second network device, the first network device determines whether to immediately process the first message. When it is determined that the processing manner of the first message is delayed processing or delayed and scheduled processing, the UE in the idle mode does not need to be immediately paged and waken up to process the first message, thereby reducing signaling overheads for paging the UE, and reducing signaling overheads of an air interface.

Further, after S903, the method may include: processing the first message or the second message based on the processing manner of the first message.

Specifically, a specific implementation of the processing the first message or the second message based on the processing manner of the first message may be:
if the processing manner of the first message is delayed processing, processing the first message or the second message when the UE enters a connected mode; or if the processing manner of the first message is delayed and scheduled processing, processing the first message or the second message when the UE enters a connected mode or a preset time point of the first message is reached.

It should be noted that, a process of processing the first message or the second message when the UE enters the connected mode is similar to a process of sending the first information to the UE when the UE enters the connected mode described in S604, and details are not described herein again. A process of processing the first message or the second message when the UE reaches the preset time point of the first message is similar to a process of sending the first information to the UE when the preset time point of the first information is reached in S604, and details are not described herein again.

Further, after S903, the method may include:
if the processing manner of the first message is delayed processing or delayed and scheduled processing, setting the first message to a wait state or the second message to a wait state.

The wait state is used to indicate that the first message or the second message is to be processed.

Correspondingly, if the first message is set to the wait state or the second message is set to the wait state after S903, specifically, a specific implementation of the processing the first message or the second message based on the processing manner of the first message may be:
if the processing manner of the first message is delayed processing or delayed and scheduled processing, processing, when the UE enters the connected mode, the first message or the second message in the wait state; or if the processing manner of the first message is delayed and scheduled processing, processing, when the preset time point of the first information is reached, the first message or the second message in the wait state.

It should be noted that, for another process that is not described in the method for processing a message shown in FIG. 9, refer to the processes and the steps in the method for processing information described in FIG. 6 or FIG. 7, provided that an operation performed on the first information is replaced with an operation performed on the first message, and details are not described herein again.

The methods provided in the embodiments of the present invention are described below with reference to scenarios.

### Embodiment 1

In a 5G network architecture, a first network device is a CP, and a second network device is a PF. An example in which session management is implemented through interaction between the CP and the PF is used to describe a method for processing information provided in this embodiment of the present invention.

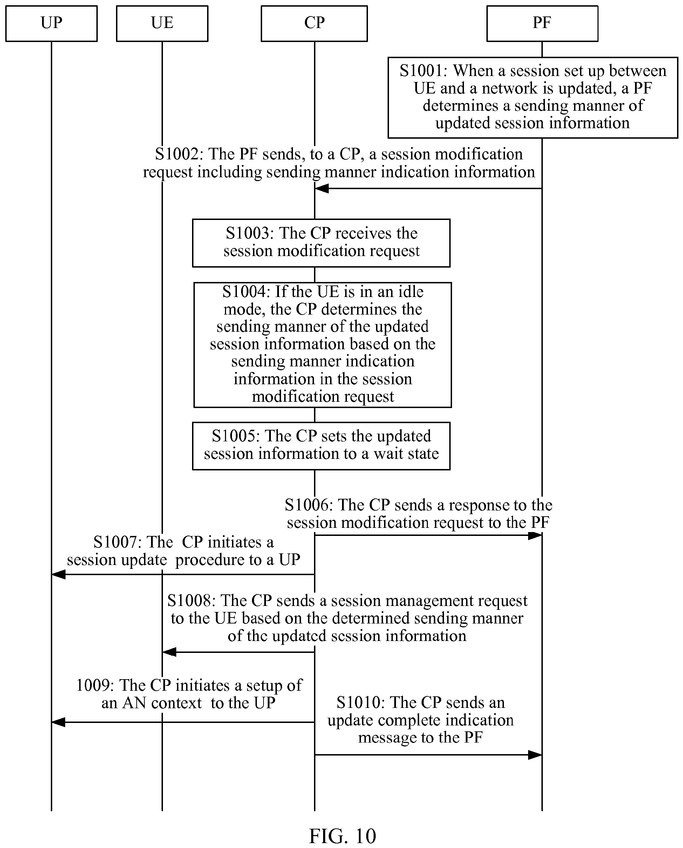

As shown in FIG. 10, the method may include the following steps.

S1001: When a session set up between UE and a network is updated, the PF determines a sending manner of updated session information.

For details about the sending manner, refer to related descriptions in the embodiment shown in FIG. 6.

Specifically, in S1001, the PF determines the sending manner of the updated session information, and determines whether the updated session information needs to be immediately updated and synchronized to a UE side.

Specifically, the PF may determine the sending manner of the updated session information based on subscription information, a request sent by an application function (English full name: Application Function, AF), updated information attribute in a session, or the like.

S1002: The PF sends, to the CP, a session modification request including sending manner indication information.

The indication information is used to indicate the sending manner of the updated session information that is determined by the PF.

The session modification request further includes the updated session information.

S1003: The CP receives the session modification request.

S1004: If the UE is in an idle mode, the CP determines the sending manner of the updated session information based on the sending manner indication information in the session modification request.

If the CP determines that the sending manner of the updated session information is delayed sending or delayed and scheduled sending in S1004, S1005 is performed.

If the CP determines that the sending manner of the updated session information is immediate sending in S1004, the CP sends a paging message to the UE in the idle mode, and then sends, to the UE when the UE enters a connected mode, a session management request including the updated session information.

S1005: The CP sets the updated session information to a wait state.

S1006: The CP sends a response to the session modification request to the PF.

S1007: The CP initiates a session update procedure to a user plane (English full name: User Plane, UP).

The CP initiates the session update procedure to the UP, to synchronize the updated session information to a user plane network device.

S1008: The CP sends a session management request to the UE based on the determined sending manner of the updated session information.

The session management request includes the updated session information.

Specifically, a specific implementation of S1008 may include the following several cases:
Case 1: If the sending manner of the updated session information that is determined by the CP is delayed sending, the CP triggers a session management procedure, sends the session management request to the UE, and synchronizes the updated session information to the UE when the UE enters the connected mode.
Case 2: The sending manner of the updated session information that is determined by the CP is delayed and scheduled sending, and indication information included in the session modification request is a time point. If the UE enters the connected mode before the time point is reached, a session management procedure is performed during a setup of a connection, and the session management request is sent to the UE; or if the UE does not enter the connected mode when the time point is reached, the CP pages the UE, triggers a session management procedure, and sends the session management request to the UE.

It should be noted that, a specific execution process of S1008 is already described in detail in S604, and details are not described herein again.

S1009: The CP initiates a setup of an access network (English full name: Access Network, AN) context to the UP.

S1010: The CP sends an update complete indication message to the PF.

S1010 is performed after the CP determines that the UE already receives the session management request.

It should be noted that, S1007 and S1009 may be combined and performed in S1009.

Further, in the method for processing information in this embodiment, the CP may receive a plurality of session modification requests, a processing method is the same as specific implementation processes of S604b and S604c, and a specific implementation process of S604 when S604b and S604c exist, and details are not described herein again.

It should be noted that, the solution shown in FIG. 10 may further include an optional step in the solution shown in FIG. 7, and details are not described herein again.

For example, before S1008, if the CP receives another session modification request sent by the PF, the CP may combine and process a plurality of received session modification requests. A combination and processing process is already described in detail in the embodiment shown in FIG. 7, and details are not described herein again.

### Embodiment 2

A difference from Embodiment 1 lies in that in Embodiment 2, a PF provides a sending policy to a CP, and the CP determines a sending manner of updated session information based on the sending policy.

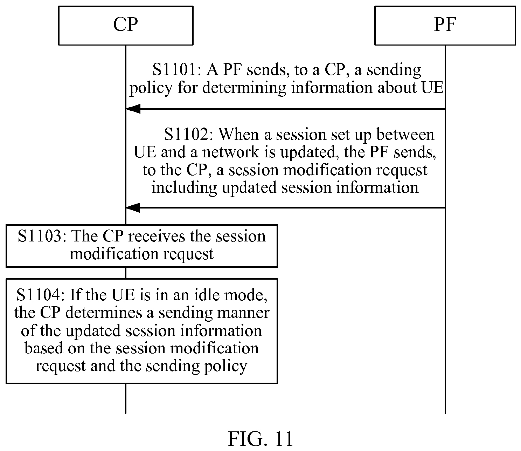

Specifically, as shown in FIG. 11, the method may include the following steps.

S1101: The PF sends, to the CP, a sending policy for determining information about UE.

The sending policy may include: a sending manner of session information corresponding to a guaranteed bit rate communication link is immediate sending; a sending manner of session information corresponding to a non-guaranteed bit rate communication link is delayed sending; a sending manner of session information of a roaming user is delayed sending; a sending manner of session information corresponding to a communications link corresponding to a high-priority service is immediate sending; and the like.

S1102: When a session set up between the UE and a network is updated, the PF sends, to the CP, a session modification request including updated session information.

S1103: The CP receives the session modification request.

S1104: If the UE is in an idle mode, the CP determines a sending manner of the updated session information based on the session modification request and the sending policy.

Execution of the solution of the method shown in FIG. 11 after S1104 is the same as that after S1004 in the method shown in FIG. 10, and details are not described herein again.

### Embodiment 3

In a roaming scenario in a 5G network architecture, first network devices are a home network-control plane network device (English full name: Home-Control Plane, H-CP) and a visited network-control plane network device (English full name: Visited-Control Plane, V-CP), and a second network device is a PF. An example in which session management is implemented through interaction among the H-CP, the V-CP, and the PF is used to describe a method for processing information provided in this embodiment of the present invention.

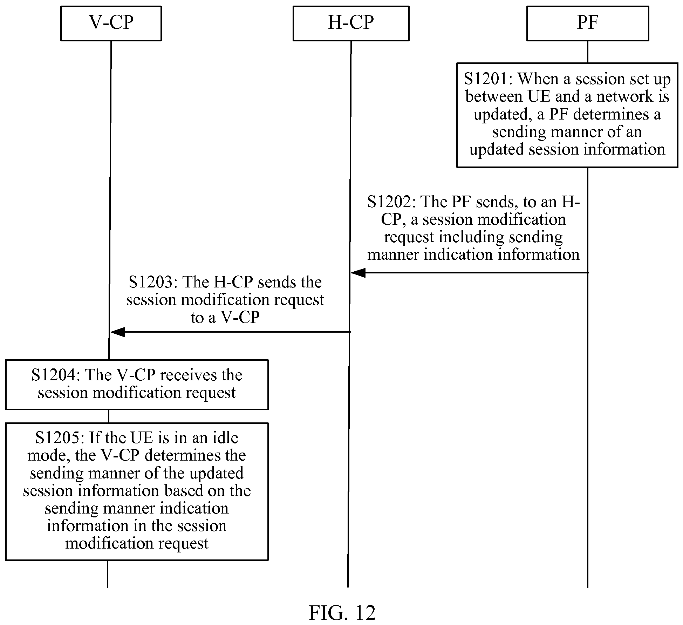

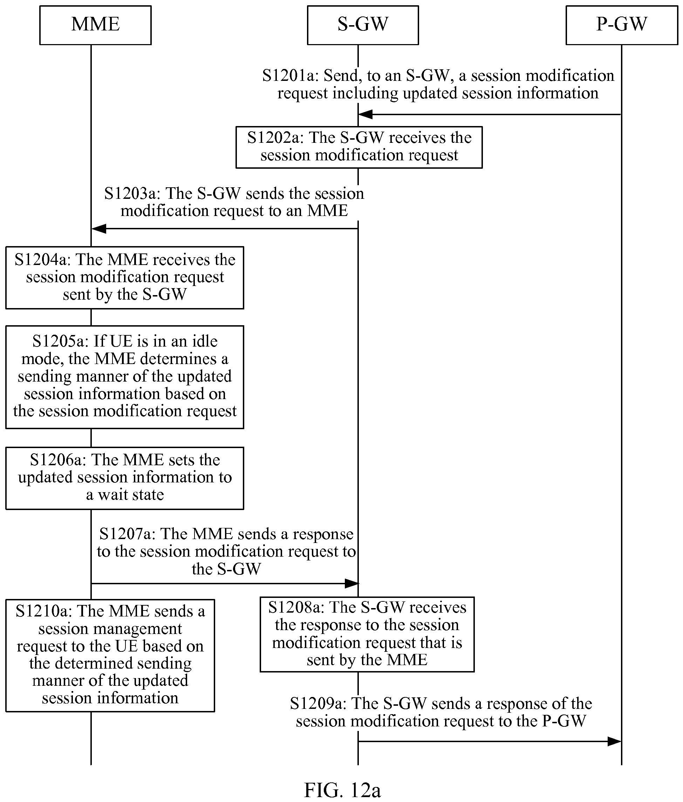

Specifically, as shown in FIG. 12, the method may include the following steps:
S1201: When a session set up between UE and a network is updated, the PF determines a sending manner of updated session information.

S1202: The PF sends, to the H-CP, a session modification request including sending manner indication information.

S1203: The H-CP sends the session modification request to the V-CP.

S1204: The V-CP receives the session modification request.

S1205: If the UE is in an idle mode, the V-CP determines a sending manner of the updated session information based on the sending manner indication information in the session modification request.

Execution of the solution of the method shown in FIG. 12 after S1205 is the same as that after S1004 in the method shown in FIG. 10, and details are not described herein again. An only difference lies in that an operation performed by the CP in FIG. 10 is performed by the V-CP in the solution shown in FIG. 12, and a process of sending from the CP to the PF in FIG. 10 is replaced with a process of sending from the V-CP to the PF by using the H-CP in the solution shown in FIG. 12.

Further, in the solution shown in FIG. 12, S1201 to S1205 may be replaced with S1101 to S1104 in the solution shown in FIG. 11. An only difference lies in that an operation performed by the CP in FIG. 11 is performed by the V-CP in the solution shown in FIG. 12, and a process of sending from the CP to the PF in FIG. 11 is replaced with a process of sending from the V-CP to the PF by using the H-CP in the solution shown in FIG. 12.

### Embodiment 4

In an LTE network architecture, a first network device is an MME, and a second network device is a P-GW. An example in which session management is implemented through interaction between the MME and the P-GW by using an S-GW is used to describe a method for processing information provided in this embodiment of the present invention.

As shown in FIG. 12a, the method may include the following steps.

S1201a: The P-GW sends, to the S-GW, a session modification request including updated session information.

The session modification request may further include sending manner indication information or a sending policy of the updated session information.

The P-GW sends, to the S-GW, the session modification request including the updated session information, so that the S-GW forwards, to the MME, the session modification request including the updated session information.

Optionally, when a session set up between UE and a network is updated, the P-GW may directly send the sending policy to the S-GW for forwarding to the MME, so that when receiving the session modification request, the MME determines a sending manner of the updated session information. In this case, the session modification request includes the sending policy.

Optionally, when a session set up between UE and a network is updated, the P-GW may determine a sending manner of the updated session information. In this case, the session modification request includes the sending manner indication information of the updated session information that is used to indicate the sending manner of the updated session information that is determined by the P-GW.

It should be noted that, a process of determining the sending manner of the updated session information by the P-GW is similar to a process of determining the sending manner of the updated session information by the PF in S 1001, and details are not described herein again.

S1202a: The S-GW receives the session modification request.

S1203a: The S-GW sends the session modification request to the MME.

After receiving the session modification request in S 1202a, optionally, the S-GW needs to parse and encapsulate the session modification request and then send the session modification request to the MME. Parsing and encapsulation processes are not limited in this embodiment of the present invention.

The session modification request obtained after the parsing and encapsulation includes the updated session information.

S1204a: The MME receives the session modification request sent by the S-GW.

S1205a: If UE is in an idle mode, the MME determines a sending manner of the updated session information based on the session modification request.

If the MME determines that the sending manner of the updated session information is delayed sending or delayed and scheduled sending in S1205a, S1206a is performed.

If the MME determines that the sending manner of the updated session information is immediate sending in S1205a, the MME sends a paging message to the UE in the idle mode, and then sends, to the UE when the UE enters a connected mode, a session management request including the updated session information.

S1206a: The MME sets the updated session information to a wait state.

S1207a: The MME sends a response to the session modification request to the S-GW.

S1208a: The S-GW receives the response to the session modification request that is sent by the MME.

S1209a: The S-GW sends a response of the session modification request to the P-GW.

S1210a: The MME sends a session management request to the UE based on the determined sending manner of the updated session information.

It should be noted that, a specific implementation process of S1210a is similar to an implementation process of S1008, and details are not described herein again.

It should be noted that, execution of the solution of the method shown in FIG. 12a after S1210a is the same as that after S1008 in the method shown in FIG. 10, and details are not described herein again.

It should be noted that, the solution shown in FIG. 12a may further include an optional step in the solution shown in FIG. 7, and details are not described herein again.

For example, before S1210a, if the MME receives another session modification request forwarded by the S-GW, the MME may combine and process a plurality of received session modification requests. A combination and processing process is already described in detail in the embodiment shown in FIG. 7, and details are not described herein again.

Further, in the methods in the foregoing four embodiments, the sending policy may be replaced with a processing policy, or the sending manner indication information may be replaced with processing manner indication information, so that the foregoing three embodiments are described as a method for processing a message. Details are described by using the following embodiments.

### Embodiment 5

In a 5G network architecture, a first network device is a CP, and a second network device is a PF. An example in which session management is implemented through interaction between the CP and the PF is used to describe a method for processing a message provided in this embodiment of the present invention.

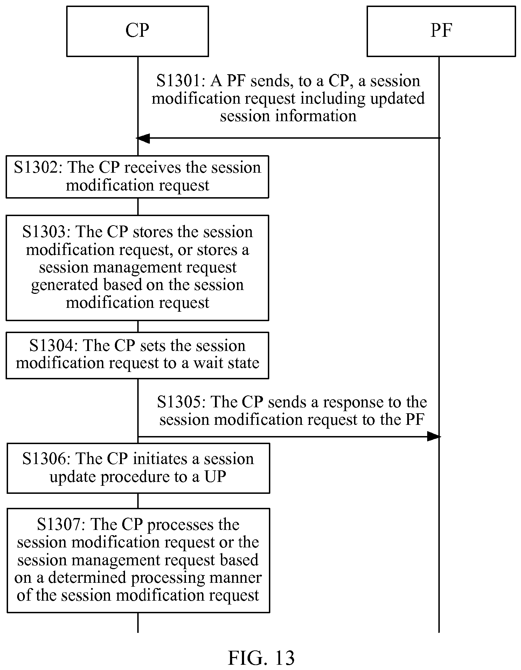

As shown in FIG. 13, the method may include the following steps.

S1301: The PF sends, to the CP, a session modification request including updated session information.

The session modification request may further include processing manner indication information or a processing policy of the session modification request.

Optionally, when a session set up between UE and a network is updated, the PF may directly send the processing policy to the CP, so that when receiving the session modification request, the CP determines a processing manner of the session modification request. In this case, the session modification request includes the processing policy.

Optionally, when a session set up between UE and a network is updated, the PF may determine a processing manner of the session modification request. In this case, the session modification request includes the processing manner indication information used to indicate the processing manner of the session modification request that is determined by the PF.

It should be noted that, a process of determining the processing manner of the session modification request by the PF is similar to a process of determining the sending manner of the updated session information by the PF in S1001, and details are not described herein again.

S1302: The CP receives the session modification request.

After S1302, if the UE is in an idle mode, and the CP determines that the processing manner of the session modification request is delayed processing or delayed and scheduled processing, S1303 is performed.

If the CP determines that the processing manner of the session modification request is immediate processing, the CP sends a paging message to the UE in the idle mode, and then, when the UE enters a connected mode, processes the session modification request or processes a session management request generated based on the session modification request.

S1303: The CP stores the session modification request, or stores a session management request generated based on the session modification request.

The session management request is generated based on the session modification request, and is a request message for sending, to the UE, the updated session information included in the session modification request.

S1304: The CP sets the session modification request to a wait state.

S1305: The CP sends a response to the session modification request to the PF.

S1306: The CP initiates a session update procedure to the UP.

The CP initiates the session update procedure to the UP, to synchronize the updated session information to a user plane network device.

S1307: The CP processes the session modification request or the session management request based on a determined processing manner of the session modification request.

The processing the session modification request includes generating a corresponding session management request and sending the session management request to the UE. The processing the session management request includes sending the session management request to the UE.

Specifically, a specific implementation of S1307 may include the following several cases:
Case 1: If the processing manner of the session modification request that is determined by the CP is delayed processing, the CP processes the session modification request or the session management request when the UE enters the connected mode.
Case 2: The processing manner of the session modification request that is determined by the CP is delayed and scheduled processing, and the session modification request further includes a preset time point of the session modification request. Before the preset time point is reached and when the UE enters the connected mode, the session modification request or the session management request is processed. If the UE does not enter the connected mode when the preset time point is reached, the CP pages the UE, and processes the session modification request or the session management request when the UE enters the connected mode.

It should be noted that, execution of the solution of the method shown in FIG. 13 after S1307 is the same as that after S1008 in the method shown in FIG. 10, and details are not described herein again.

It should be noted that, the solution shown in FIG. 13 may further include an optional step in the solution shown in FIG. 7, and details are not described herein again.

For example, before S1307, if the CP receives another session modification request sent by the PF, the CP may combine and process a plurality of received session modification requests. A combination and processing process is already described in detail in the embodiment shown in FIG. 7, and details are not described herein again.

Further, if the method in the embodiment shown in FIG. 13 is applied to a Long Term Evolution (English full name: Long Term Evolution, LTE) scenario, an MME performs a function of the CP, a PCRF performs a function of the PF, and interaction between the PCRF and MME is implemented through forwarding by a P-GW and an S-GW, to implement a method for processing a message in an LTE network. A specific process is described below.

### Embodiment 6

In an LTE network architecture, an example in which session management is implemented through interaction between an MME and a P-GW by using an S-GW is used to describe a method for processing a message provided in this embodiment of the present invention.

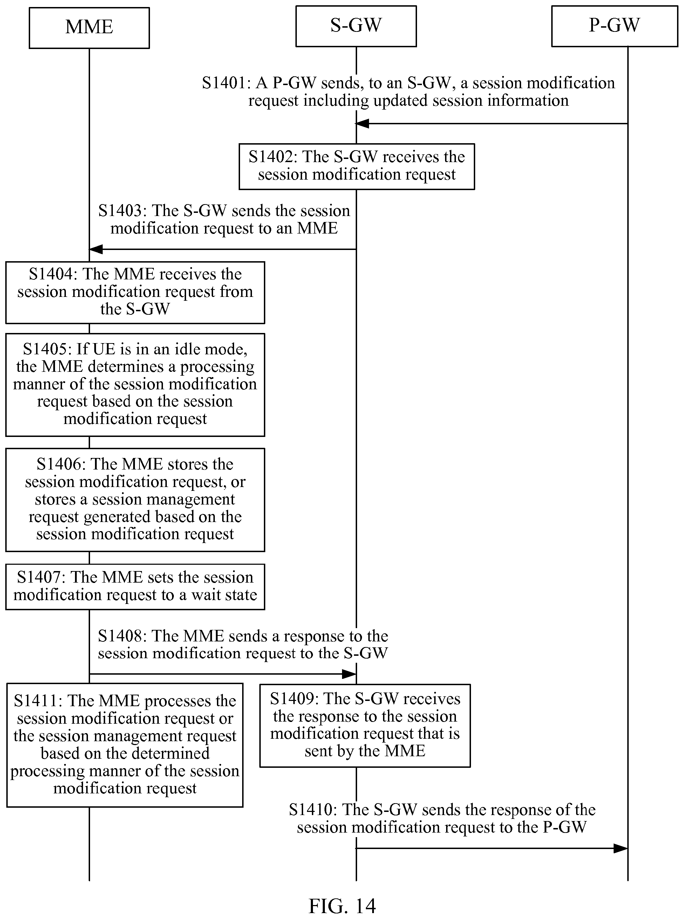

As shown in FIG. 14, the method may include the following steps.

S1401: The P-GW sends, to the S-GW, a session modification request including updated session information.

The session modification request may further include processing manner indication information or a processing policy of the session modification request.

The P-GW sends, to the S-GW, the session modification request including the updated session information, so that the S-GW forwards, to the MME, the session modification request including the updated session information.

Optionally, when a session set up between UE and a network is updated, the P-GW may directly send the processing policy to the S-GW for forwarding to the MME, so that when receiving the session modification request, the MME determines a processing manner of the updated session information. In this case, the session modification request includes the processing policy.

Optionally, when a session set up between UE and a network is updated, the P-GW may determine a processing manner of the session modification request. In this case, the session modification request includes the processing manner indication information.

It should be noted that, a process of determining the processing manner by the P-GW is similar to a process of determining the sending manner of the updated session information by the PF in S1001, and details are not described herein again.

S1402: The S-GW receives the session modification request.

S1403: The S-GW sends the session modification request to an MME.

After receiving the session modification request in S1402, optionally, the S-GW needs to parse and encapsulate the session modification request and then send the session modification request to the MME. Parsing and encapsulation processes are not limited in this embodiment of the present invention.

S1404: The MME receives the session modification request from the S-GW.

S1405: If UE is in an idle mode, the MME determines a processing manner of the session modification request based on the session modification request.

If the MME determines that the processing manner of the session modification request is delayed processing or delayed and scheduled processing in S1405, S1406 is performed.

If the MME determines that the processing manner of the session modification request is immediate processing in S1405, the MME sends a paging message to the UE in the idle mode, and then, when the UE enters a connected mode, processes the session modification request or processes a session management request generated based on the session modification request.

S1406: The MME stores the session modification request, or stores a session management request generated based on the session modification request.

The session management request is generated based on the session modification request, and is a request message for sending, to the UE, the updated session information included in the session modification request.

S1407: The MME sets the session modification request to a wait state.

S1408: The MME sends a response to the session modification request to the S-GW.

S1409: The S-GW receives the response to the session modification request that is sent by the MME.

S1410: The S-GW sends the response of the session modification request to the P-GW.

S1411: The MME processes the session modification request or the session management request based on the determined processing manner of the session modification request.

The processing the session modification request includes: generating a corresponding session management request and sending the session management request to the UE. The processing the session management request includes: sending the session management request to the UE.

It should be noted that, a specific implementation process of S1411 is similar to an implementation process of S1307, and details are not described herein again.

It should be noted that, execution of the solution of the method shown in FIG. 14 after S1411 is the same as that after S1008 in the method shown in FIG. 10, and details are not described herein again.

It should be noted that, the solution shown in FIG. 14 may further include an optional step in the solution shown in FIG. 7, and details are not described herein again.

For example, before S1411, if the MME receives another session modification request forwarded by the S-GW, the MME may combine and process a plurality of received session modification requests. A combination and processing process is already described in detail in the embodiment shown in FIG. 7, and details are not described herein again.

The solutions provided in the embodiments of the present invention are described above mainly from a perspective of interaction between the network elements. It may be understood that, to implement the foregoing functions, the network elements such as the first network device and the second network device include corresponding hardware structures and/or software modules for performing the functions. Persons skilled in the art should easily be aware that, with reference to examples of units and algorithm steps described in the embodiments disclosed in this specification, the present invention may be implemented in a hardware form or a form of a combination of hardware and computer software. Whether a function is performed by hardware or hardware driven by computer software depends on particular applications and design constraints of the technical solutions. Persons skilled in the art may use different methods to implement the described functions for each particular application, but it should not be considered that the implementation goes beyond the scope of the present invention.

In the embodiments of the present invention, functional modules of the first network device, the second network device, and the like may be divided according to the foregoing examples in the methods, for example, the functional modules may be divided by using corresponding functions, or two or more functions may be integrated into a processing module. The integrated module may be implemented in a form of hardware, or may be implemented in a form of a software functional module. It should be noted that, division of modules in the embodiments of the present invention is an example, and is merely logical function division and may be other division during actual implementation.

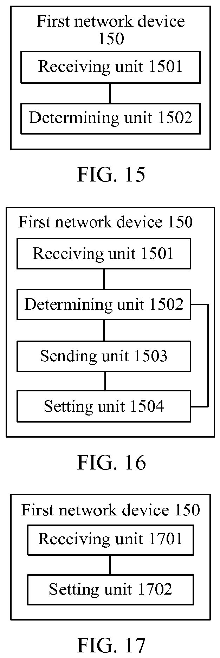

When the functional modules are divided by using corresponding functions, FIG. 15 is a possible schematic structural diagram of the first network device in the foregoing embodiment. The first network device may be configured to perform an action of the first network device in the embodiment shown in FIG. 6 or FIG. 7 or FIG. 8 or FIG. 9, or an action of the CP in the embodiment shown in FIG. 10 or FIG. 11 or FIG. 12 or FIG. 14, or an action of the MME in the embodiment shown in FIG. 14.

In an implementation, as shown in FIG. 15, a first network device 150 includes a receiving unit 1501 and a determining unit 1502.

The receiving unit 1501 is configured to receive first information of UE sent by a second network device, where the UE is in an idle mode.

The determining unit 1502 is configured to determine a sending manner of the first information based on sending manner related information of the first information received by the receiving unit 1501, where the sending manner includes immediate sending, delayed sending, or delayed and scheduled sending.

Optionally, the sending manner related information of the first information may include: sending manner indication information, where the sending manner indication information is used to indicate a sending manner of the first information received by the receiving unit 1501; or a sending policy, where the sending policy is used to determine a sending manner of the first information received by the receiving unit 1501.

Specifically, when the sending manner related information of the first information includes the sending manner indication information, the determining unit 1502 may be specifically configured to determine that the sending manner of the first information received by the receiving unit 1501 is the sending manner indicated by the sending manner indication information.

Specifically, when the sending manner related information of the first information includes the sending policy, the determining unit 1502 may be specifically configured to determine, based on the sending policy, the sending manner of the first information received by the receiving unit 1501.

Further, a receiving unit 1501 may be configured to: before the determining unit 1502 determines the sending manner of the first information based on the sending manner related information of the first information, receive the sending manner related information of the first information sent by the second network device.

Further, as shown in FIG. 16, the first network device 150 may include:
a sending unit 1503, configured to send the first information received by the receiving unit 1501 to the UE based on the sending manner of the first information that is determined by the determining unit 1502.

Optionally, the sending unit 1503 may be specifically configured to:
if the determining unit 1502 determines that the sending manner of the first information is delayed sending, send the first information received by the receiving unit 1501 to the UE when the UE enters a connected mode; or if the sending manner of the first information that is determined by the determining unit 1502 is delayed and scheduled sending, send the first information received by the receiving unit 1501 to the UE when the UE enters a connected mode or a preset time point of the first information is reached.

Further, as shown FIG. 16, the first network device 150 may include:
a setting unit 1504, configured to: if the sending manner of the first information that is determined by the determining unit 1502 is delayed sending or delayed and scheduled sending, set the first information received by the receiving unit 1501 to a wait state, where the wait state is used to indicate that the first information is to be sent.

Optionally, the sending unit 1503 may be further configured to:
if the determining unit 1502 determines that the sending manner of the first information is delayed sending or delayed and scheduled sending and the first information is in the wait state, send the first information received by the receiving unit 1501 to the UE when the UE enters the connected mode; or if the determining unit 1502 determines that the sending manner of the first information is delayed and scheduled sending and the first information is in the wait state, send the first information received by the receiving unit 1501 to the UE when the preset time point of the first information is reached.

Optionally, the receiving unit 1501 may be specifically configured to receive a first message sent by the second network device, where the first message carries the first information and the sending manner related information of the first information.

The setting unit 1504 may be further configured to: if the sending manner of the first information is delayed sending or delayed and scheduled sending, set the first message received by the receiving unit 1501 to a wait state.

Optionally, the first information includes information synchronized or updated to the UE in a session management procedure.

In another implementation, as shown in FIG. 17, the first network device 150 may include a receiving unit 1701 and a setting unit 1702.

The receiving unit 1701 is configured to receive first information of UE and sending manner indication information of the first information that are sent by a second network device, where the UE is in an idle mode.

The setting unit 1702 is configured to: if the sending manner indication information received by the receiving unit 1701 indicates that send the first information in a delayed sending manner or a delayed and scheduled sending manner, set the first information received by the receiving unit 1701 to a wait state, where the wait state is used to indicate that the first information is to be sent.

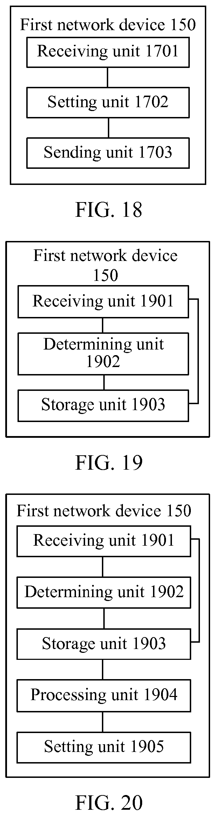

Further, as shown in FIG. 18, the first network device 150 may include a sending unit 1703.

The sending unit 1703 is configured to send the first information received by the receiving unit 1701 to the UE when the UE enters a connected mode and the first information is in the wait state.

Alternatively, the sending unit 1703 may be configured to send the first information received by the receiving unit 1701 to the UE when a preset time point of the first information is reached and the first information is in the wait state.

In another implementation, as shown in FIG. 19, the first network device 150 may include a receiving unit 1901, a determining unit 1902, and a storage unit 1903.

The receiving unit 1901 is configured to receive a first message sent by a second network device, where the first message includes first information of UE, and the UE is in an idle mode.

The determining unit 1902 is configured to determine a processing manner of the first message received by the receiving unit 1901.

The storage unit 1903 is configured to: if the determining unit 1902 determines that the processing manner of the first message received by the receiving unit 1901 is delayed processing or delayed and scheduled processing, store the first message received by the receiving unit 1901, or store a second message generated based on the first message received by the receiving unit 1901.

Further, the determining unit 1902 is specifically configured to: determine, based on processing manner indication information, that the processing manner of the first message received by the receiving unit 1901 is delayed processing or delayed and scheduled processing; or determine, based on a processing policy, that the processing manner of the first message received by the receiving unit 1901 is delayed processing or delayed and scheduled processing.

Optionally, the first message received by the receiving unit 1901 includes the processing manner indication information or the processing policy. The processing manner indication information is used to indicate immediate processing or delayed processing or delayed and scheduled processing.

Further, as shown in FIG. 20, the first network device 150 may include a processing unit 1904.

The processing unit 1904 is specifically configured to: if the determining unit 1902 determines that the processing manner of the first message is delayed processing, process, when the UE enters a connected mode, the first message or the second message stored by the storage unit 1903; or
if the determining unit 1902 determines that the processing manner of the first message is delayed and scheduled processing, process, when the UE enters a connected mode or a preset time point of the first message is reached, the first message or the second message stored by the storage unit 1903.

Further, as shown in FIG. 20, the first network device 150 may include a setting unit 1905.

The setting unit 1905 may be specifically configured to: if the determining unit 1902 determines that the processing manner of the first message is delayed processing or delayed and scheduled processing, set the first message stored by the storage unit 1903 to a wait state or the second message stored by the storage unit 1903 to a wait state, where the wait state is used to indicate that the first message or the second message stored by the storage unit 1903 is to be processed.

Further, the processing unit 1904 may alternatively be configured to: if the determining unit 1902 determines that the processing manner of the first message is delayed processing or delayed and scheduled processing, process, when the UE enters the connected mode, the first message or the second message in the wait state that is stored by the storage unit 1903; or if the determining unit 1902 determines that the processing manner of the first message is delayed and scheduled processing, process, when the preset time point of the first information is reached, the first message or the second message in the wait state that is stored by the storage unit 1903.

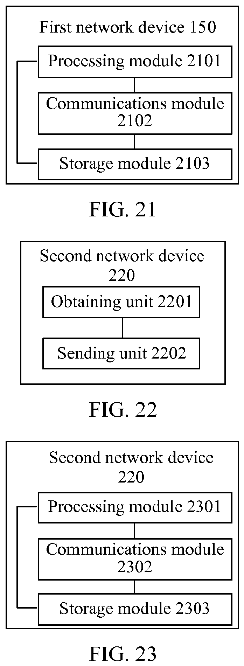

When an integrated unit is used, FIG. 21 is a possible schematic structural diagram of the first network device 150 in the foregoing embodiment. The first network device 150 may include a processing module 2101 and a communications module 2102. The processing module 2101 is configured to control and manage an action of the first network device 150. For example, the processing module 2101 is configured to support, by using the communications module 2102, the first network device 150 in performing S603, S604c, S903, S1004, S1104, S1205, S1405, and/or other processes applied to the technologies described in this specification. The processing module 2101 is further configured to support the first network device 150 in performing S602, S604b, S606, S902, S1003, S1103, S1204, S1302, and S1404 by using the communications module 2102. The communications module 2102 is configured to support communication between the first network device 150 and another network entity. The first network device 150 may further include a storage module 2103, configured to store program code and data of the first network device 150.

The processing module 2101 may be the processor 401 in a physical structure of the first network device 40 shown in FIG. 4, and may be a processor or a controller, for example, may be a CPU, a general-purpose processor, a DSP, an ASIC, an FPGA, or another programmable logical device, a transistor logical device, a hardware component, or any combination thereof. The controller/processor may implement or execute various example logical blocks, modules, and circuits described with reference to content disclosed in the present invention. Alternatively, the processor may be a combination of processors implementing a computing function, for example, a combination of one or more microprocessors, or a combination of the DSP and a microprocessor. The communications module 2102 may be the transceiver 404 in the physical structure of the first network device 150 shown in FIG. 4, or may be a transceiver circuit, a communications interface, or the like. The storage module 2103 may be the memory in the physical structure of the first network device 150 shown in FIG. 4.

When the processing module 2101 is a processor, the communications module 2102 is a transceiver, and the storage module 2103 is a memory, the first network device 150 in FIG. 21 in this embodiment of the present invention may be the first network device 40 shown in FIG. 4.

When the functional modules are divided by using corresponding functions, FIG. 22 is a possible schematic structural diagram of a second network device 220 in the foregoing embodiment. The second network device 220 may be configured to perform an action of the second network device in the embodiment shown in FIG. 6 or FIG. 7 or FIG. 8 or FIG. 9, or an action of the PF in the embodiment shown in FIG. 10 or FIG. 11 or FIG. 12 or FIG. 14, or an action of the P-GW in the embodiment shown in FIG. 14.

As shown in FIG. 22, the second network device 220 may include an obtaining unit 2201 and a sending unit 2202.

The obtaining unit 2201 is configured to obtain sending manner related information of first information of UE, where the sending manner related information is used to determine a sending manner of the first information.

The sending unit 2202 is configured to send, to a first network device, the first information and the sending manner related information of the first information that is obtained by the obtaining unit 2201.

Optionally, the sending manner related information of the first information includes: sending manner indication information, where the sending manner indication information is used to indicate a sending manner of the first information; or a sending policy, where the sending policy is used to determine a sending manner of the first information.

Further, if the sending manner related information of the first information includes the sending manner indication information, the obtaining unit 2201 is specifically configured to determine the sending manner indication information of the first information based on the sending policy.

When an integrated unit is used, FIG. 23 is a possible schematic structural diagram of the second network device 220 in the foregoing embodiment. The second network device 220 may include a processing module 2301 and a communications module 2302. The processing module 2301 is configured to control and manage an action of the second network device 220. For example, the processing module 2301 is configured to support the second network device 220 in obtaining a sending policy or sending manner indication information, or a processing policy or processing manner indication information, and specifically performs S1001, S1201, and/or other processes applied to the technologies described in this specification. The processing module 2301 is further configured to support the second network device 220 in performing S601, S801, S901, S1002, S1101, S1102, and S1202 by using the communications module 2302. The communications module 2302 is configured to support communication between the second network device 220 and another network entity. The second network device 220 may further include a storage module 2303, configured to store program code and data of the second network device 220.

The processing module 2301 may be the processor 501 in a physical structure of the second network device 50 shown in FIG. 5, and may be a processor or a controller, for example, may be a CPU, a general-purpose processor, a DSP, an ASIC, an FPGA, or another programmable logical device, a transistor logical device, a hardware component, or any combination thereof. The controller/processor may implement or execute various example logical blocks, modules, and circuits described with reference to content disclosed in the present invention. Alternatively, the processor may be a combination of processors implementing a computing function, for example, a combination of one or more microprocessors, or a combination of the DSP and a microprocessor. The communications module 2302 may be the transceiver in the physical structure of the second network device 50 shown in FIG. 5, or may be a transceiver circuit, a communications interface, or the like. The storage module 2303 may be the memory in the physical structure of the second network device 50 shown in FIG. 5.

When the processing module 2301 is a processor, the communications module 2302 is a transceiver, and the storage module 2303 is a memory, the second network device 220 in FIG. 23 in this embodiment of the present invention may be the second network device 50 shown in FIG. 5.

Method or algorithm steps described in combination with the content disclosed in the present invention may be implemented by hardware, or may be implemented by a processor by executing a software instruction. The software instruction may include a corresponding software module. The software module may be stored in a RAM, a flash memory, a ROM, an erasable programmable read only memory (Erasable Programmable ROM, EPROM), an electrically erasable programmable read-only memory (Electrically EPROM, EEPROM), a register, a hard disk, a mobile hard disk, a compact disc read-only memory (CD-ROM), or any other form of storage medium well-known in the art. For example, a storage medium is coupled to a processor, so that the processor can read information from the storage medium or write information into the storage medium. Certainly, the storage medium may be a component of the processor. The processor and the storage medium may be located in the ASIC. In addition, the ASIC may be located in a core network interface device. Certainly, the processor and the storage medium may exist in the core network interface device as discrete components.

Persons skilled in the art should be aware that in the foregoing one or more examples, functions described in the present invention may be implemented by hardware, software, firmware, or any combination thereof. When the present invention is implemented by software, the foregoing functions may be stored in a computer-readable medium or transmitted as one or more instructions or code in the computer-readable medium. The computer-readable medium includes a computer storage medium and a communications medium, where the communications medium includes any medium that enables a computer program to be transmitted from one place to another. The storage medium may be any available medium accessible to a general-purpose or dedicated computer. It may be clearly understood by persons skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, functional units in the embodiments of the present invention may be integrated into one processing unit, or each of the units may exist alone physically, or two or more units are integrated into one unit. The integrated unit may be implemented in a form of hardware, or may be implemented in a form of hardware in addition to a software functional unit.

When the foregoing integrated unit is implemented in a form of a software functional unit, the integrated unit may be stored in a computer-readable storage medium. The software functional unit is stored in a storage medium and includes several instructions for instructing a computer device (which may be a personal computer, a server, a network device, or the like) to perform some of the steps of the methods described in the embodiments of the present invention. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

Finally, it should be noted that the foregoing embodiments are merely intended for describing the technical solutions of the present invention rather than limiting the present invention. Although the present invention is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of the embodiments of the present invention.

## Claims

1. A method for processing a message, **characterized by** comprising:
receiving (S902), by a first network device, a first message from a second network device, wherein the first message comprises first information of user equipment, UE;
if the UE is in an idle mode, determining (S903), by the first network device, that a processing manner of the first message is delayed processing;
storing, by the first network device, the first message, without paging the UE;
when the UE enters a connected mode, sending, by the first network device, the first information to the UE.

2. The method according to claim 1, wherein the first information comprises bearer context information of the UE.

3. The method according to claim 1 or 2, wherein the determining that a processing manner of the first message is delayed processing comprises:
determining, based on processing manner indication information, that the processing manner of the first message is delayed processing; or
determining, based on a processing policy, that the processing manner of the first message is delayed processing.

4. The method according to claim 1 or 2, wherein the first message comprises the processing manner indication information or the processing policy; and
the processing manner indication information is used to indicate delayed processing.

5. The method according to any one of claims 1 to 4, wherein the method further comprises:
in response to the processing manner of the first message is delayed processing, setting, by the first network device, the first message to a wait state, wherein the wait state is used to indicate that the first message is to be processed; and
processing, by the first network device, the first message in the wait state when the UE enters the connected mode.

6. The method according to any one of claims 1 to 5, wherein the first network device is a control plane, CP, entity, and the second network device is a policy function, PF, entity.

7. A first network device, **characterized by** comprising:
a receiving unit (1901), configured to receive a first message from a second network device, wherein the first message comprises first information of user equipment, UE;
a determining unit (1902), configured to determine a processing manner of the first message received by the receiving unit (1901) if the UE is in an idle mode;
a storage unit (1903), configured to: in response to the determining unit (1902) determines that the processing manner of the first message received by the receiving unit (1901) is delayed processing, store the first message received by the receiving unit (1901) without paging the UE;
a sending unit, configured to send, when the UE enters a connected mode, the first information to the UE.

8. The first network device according to claim 7, wherein the first information comprises bearer context information of the UE.

9. The first network device according to claim 7 or 8, wherein the determining unit (1902) is further configured to:
determine, based on processing manner indication information, that the processing manner of the first message received by the receiving unit (1901) is delayed processing; or
determine, based on a processing policy, that the processing manner of the first message received by the receiving unit (1901) is delayed processing.

10. The first network device according to any one of claims 7 to 9, wherein the first message received by the receiving unit (1901) comprises the processing manner indication information or the processing policy; and
the processing manner indication information is used to indicate delayed processing.

11. The first network device according to any one of claims 7 to 10, wherein the first network device further comprises a setting unit (1905) and a processing unit (1904),
the setting unit (1905) is configured to: in response to the determining unit (1902) determines that the processing manner of the first message is delayed processing, set the first message stored by the storage unit (1903) to a wait state, wherein the wait state is used to indicate that the first message stored by the storage unit (1903) is to be processed; and
the processing unit (1904), is configured to: process the first message in the wait state that is stored by the storage unit (1903) when the UE enters the connected mode.

12. The first network device according to any one of claims 7 to 11, wherein the first network device is a control plane, CP, entity, and the second network device is a policy function, PF, entity.

13. A system, **characterized by** comprising:
the first network device according to any one of claims 7 to 12; and
a second network device, configured to send a first message to the first network device.

14. A computer readable storage medium, configured to store program code, and the program code includes an instruction for performing the method described in any one of claims 1 to 6.

## Patentansprüche

1. Verfahren zum Verarbeiten einer Nachricht, **gekennzeichnet dadurch, dass** es Folgendes umfasst:
Empfangen (S902), durch eine erste Netzwerkvorrichtung, einer ersten Nachricht von einer zweiten Netzwerkvorrichtung, wobei die erste Nachricht erste Informationen eines Benutzergerätes, UE, umfasst;
wenn sich das UE in einem Ruhemodus befindet, Bestimmen (S903) durch die erste Netzwerkvorrichtung, dass es sich bei einer Verarbeitungsweise der ersten Nachricht um eine verzögerte Verarbeitung handelt;
Speichern der ersten Nachricht durch die erste Netzwerkvorrichtung, ohne das UE anzufunken;
wenn das UE in einen Verbindungsmodus eintritt, Senden, durch die erste Netzwerkvorrichtung, der ersten Informationen an das UE.

2. Verfahren nach Anspruch 1, wobei die ersten Informationen Trägerkontextinformation des UE umfassen.

3. Verfahren nach Anspruch 1 oder 2, wobei das Bestimmen, dass es sich bei einer Verarbeitungsweise der ersten Nachricht um eine verzögerte Verarbeitung handelt, Folgendes umfasst:
Bestimmen, basierend auf Angabeinformationen zur Verarbeitungsweise, dass es sich bei der Verarbeitungsweise der ersten Nachricht um eine verzögerte Verarbeitung handelt; oder
Bestimmen, basierend auf einer Verarbeitungsrichtlinie, dass es sich bei der Verarbeitungsweise der ersten Nachricht um eine verzögerte Verarbeitung handelt.

4. Verfahren nach Anspruch 1 oder 2, wobei die erste Nachricht die Angabeinformationen zur Verarbeitungsweise oder die Verarbeitungsrichtlinie umfasst; und
die Angabeinformationen zur Verarbeitungsweise zum Angeben der verzögerten Verarbeitung verwendet werden.

5. Verfahren nach einem der Ansprüche 1 bis 4, wobei das Verfahren ferner Folgendes umfasst:
als Reaktion darauf, dass es sich bei der Verarbeitungsweise der ersten Nachricht um eine verzögerte Verarbeitung handelt, Einstellen, durch die erste Netzwerkvorrichtung, der ersten Nachricht auf einen Wartezustand, wobei der Wartezustand verwendet wird, um anzugeben, dass die erste Nachricht verarbeitet werden soll; und
Verarbeiten, durch die erste Netzwerkvorrichtung, der ersten Nachricht in dem Wartezustand, wenn das UE in den Verbindungsmodus eintritt.

6. Verfahren nach einem der Ansprüche 1 bis 5, wobei es sich bei der ersten Netzwerkvorrichtung um eine Einheit der Steuerungsebene, CP, handelt und es sich bei der zweiten Netzwerkvorrichtung um eine Einheit der Richtlinienfunktion, PF, handelt.

7. Erste Netzwerkvorrichtung, **dadurch gekennzeichnet, dass** sie Folgendes umfasst:
eine Empfängereinheit (1901), die dazu konfiguriert ist, eine erste Nachricht von einer zweiten Netzwerkvorrichtung zu empfangen, wobei die erste Nachricht erste Informationen eines Benutzergerätes, UE, umfasst;
eine Bestimmungseinheit (1902), die dazu konfiguriert ist, eine Verarbeitungsweise der durch die Empfängereinheit (1901) empfangenen ersten Nachricht zu bestimmen, wenn sich das UE in einem Ruhemodus befindet;
eine Speichereinheit (1903), die dazu konfiguriert ist, als Reaktion darauf, dass die Bestimmungseinheit (1902) bestimmt, dass es sich bei der Verarbeitungsweise der durch die Empfängereinheit (1901) empfangenen ersten Nachricht um eine verzögerte Verarbeitung handelt, die durch die Empfängereinheit (1901) empfangene erste Nachricht zu speichern, ohne das UE anzufunken;
eine Sendeeinheit, die dazu konfiguriert ist, die ersten Informationen an das UE zu senden, wenn das UE in einen Verbindungsmodus eintritt.

8. Erste Netzwerkvorrichtung nach Anspruch 7, wobei die ersten Informationen Trägerkontextinformationen des UE umfassen.

9. Erste Netzwerkvorrichtung nach Anspruch 7 oder 8, wobei die Bestimmungseinheit (1902) ferner zu Folgendem konfiguriert ist:
Bestimmen, basierend auf Angabeinformationen zur Verarbeitungsweise, dass es sich bei der Verarbeitungsweise der durch die Empfängereinheit (1901) empfangenen ersten Nachricht um eine verzögerte Verarbeitung handelt; oder
Bestimmen, basierend auf einer Verarbeitungsrichtlinie, dass es sich bei der Verarbeitungsweise der durch die Empfängereinheit (1901) empfangenen ersten Nachricht um eine verzögerte Verarbeitung handelt.

10. Erste Netzwerkvorrichtung nach einem der Ansprüche 7 bis 9, wobei die durch die Empfängereinheit (1901) empfangene erste Nachricht die Angabeinformationen zur Verarbeitungsweise oder die Verarbeitungsrichtlinie umfasst; und
die Angabeinformationen zur Verarbeitungsweise zum Angeben der verzögerten Verarbeitung verwendet werden.

11. Erste Netzwerkvorrichtung nach einem der Ansprüche 7 bis 10, wobei die erste Netzwerkvorrichtung ferner eine Einstelleinheit (1905) und eine Verarbeitungseinheit (1904) umfasst,
die Einstelleinheit (1905) dazu konfiguriert ist, als Reaktion darauf, dass die Bestimmungseinheit (1902) bestimmt, dass es sich bei der Verarbeitungsweise der ersten Nachricht um eine verzögerte Verarbeitung handelt, die durch die Speichereinheit (1903) gespeicherte erste Nachricht auf einen Wartezustand einzustellen, wobei der Wartezustand verwendet wird, um anzugeben, dass die durch die Speichereinheit (1903) gespeicherte erste Nachricht verarbeitet werden soll; und
die Verarbeitungseinheit (1904) dazu konfiguriert ist, die erste Nachricht in dem Wartezustand, die durch die Speichereinheit (1903) gespeichert ist, zu verarbeiten, wenn das UE in den Verbindungsmodus eintritt.

12. Erste Netzwerkvorrichtung nach einem der Ansprüche 7 bis 11, wobei es sich bei der ersten Netzwerkvorrichtung um eine Einheit der Steuerungsebene, CP, handelt und es sich bei der zweiten Netzwerkvorrichtung um eine Einheit der Richtlinienfunktion, PF, handelt.

13. System, **dadurch gekennzeichnet, dass** es Folgendes umfasst:
die erste Netzwerkvorrichtung nach einem der Ansprüche 7 bis 12; und
eine zweite Netzwerkvorrichtung, die dazu konfiguriert ist, eine erste Nachricht an die erste Netzwerkvorrichtung zu senden.

14. Computerlesbares Speichermedium, das dazu konfiguriert ist, Programmcode zu speichern, und wobei der Programmcode eine Anweisung zum Durchführen des Verfahrens nach einem der Ansprüche 1 bis 6 beinhaltet.

## Revendications

1. Procédé permettant de traiter un message, **caractérisé en ce qu'**il comprend :
la réception (S902), par un premier dispositif de réseau, d'un premier message à partir d'un second dispositif de réseau, dans lequel le premier message comprend des premières informations d'un équipement utilisateur, UE ;
si l'UE est dans un mode de veille, le fait de déterminer (S903), par le premier dispositif de réseau, qu'un genre de traitement du premier message est un traitement retardé ;
le stockage, par le premier dispositif de réseau, du premier message, sans recherche de l'UE ;
lorsque l'UE entre dans un mode connecté, l'envoi, par le premier dispositif de réseau, des premières informations à l'UE.

2. Procédé selon la revendication 1, dans lequel les premières informations comprennent des informations de contexte de porteuse de l'UE.

3. Procédé selon la revendication 1 ou 2, dans lequel le fait de déterminer qu'un genre de traitement du premier message est un traitement retardé comprend :
le fait de déterminer, sur la base d'informations d'indication de genre de traitement, que le genre de traitement du premier message est un traitement retardé ; ou
le fait de déterminer, sur la base d'une politique de traitement, que le genre de traitement du premier message est un traitement retardé.

4. Procédé selon la revendication 1 ou 2, dans lequel le premier message comprend les informations d'indication de genre de traitement ou la politique de traitement ; et
les informations d'indication de genre de traitement sont utilisées pour indiquer un traitement retardé.

5. Procédé selon l'une quelconque des revendications 1 à 4, dans lequel le procédé comprend en outre :
en réponse au genre de traitement du premier message qui est un traitement retardé, le réglage, par le premier dispositif de réseau, du premier message sur un état d'attente, dans lequel l'état d'attente est utilisé pour indiquer que le premier message doit être traité ; et
le traitement, par le premier dispositif de réseau, du premier message dans l'état d'attente lorsque l'UE entre dans le mode connecté.

6. Procédé selon l'une quelconque des revendications 1 à 5, dans lequel le premier dispositif de réseau est une entité de plan de commande, CP, et le second dispositif de réseau est une entité de fonction de politique, PF.

7. Premier dispositif de réseau, **caractérisé en ce qu'**il comprend :
une unité de réception (1901), conçue pour recevoir un premier message à partir d'un second dispositif de réseau, dans lequel le premier message comprend des premières informations d'un équipement utilisateur, UE ;
une unité de détermination (1902), conçue pour déterminer un genre de traitement du premier message reçu par l'unité de réception (1901) si l'UE est dans un état de veille ;
une unité de stockage (1903), conçue pour : en réponse à l'unité de détermination (1902) qui détermine que le genre de traitement du premier message reçu par l'unité de réception (1901) est un traitement retardé, stocker le premier message reçu par l'unité de réception (1901) sans rechercher l'UE ;
une unité d'envoi, conçue pour envoyer, lorsque l'UE entre dans un mode connecté, les premières informations à l'UE.

8. Premier dispositif de réseau selon la revendication 7, dans lequel les premières informations comprennent des informations de contexte de porteuse de l'UE.

9. Premier dispositif de réseau selon la revendication 7 ou 8, dans lequel l'unité de détermination (1902) est en outre conçue pour :
déterminer, sur la base d'informations d'indication de genre de traitement, que le genre de traitement du premier message reçu par l'unité de réception (1901) est un traitement retardé ; ou
déterminer, sur la base d'une politique de traitement, que le genre de traitement du premier message reçu par l'unité de traitement (1901) est un traitement retardé.

10. Premier dispositif de réseau selon l'une quelconque des revendications 7 à 9, dans lequel le premier message reçu par l'unité de réception (1901) comprend les informations d'indication de genre de traitement ou la politique de traitement ; et
les informations d'indication de genre de traitement sont utilisées pour indiquer un traitement retardé.

11. Premier dispositif de réseau selon l'une quelconque des revendications 7 à 10, dans lequel le premier dispositif de réseau comprend en outre une unité de réglage (1905) et une unité de traitement (1904),
l'unité de réglage (1905) est conçue pour : en réponse à l'unité de détermination (1902) qui détermine que le genre de traitement du premier message est un traitement retardé, régler le premier message stocké par l'unité de stockage (1903) sur un état d'attente, dans lequel l'état d'attente est utilisé pour indiquer que le premier message stocké par l'unité de stockage (1903) doit être traité ; et
l'unité de traitement (1904) est conçue pour : traiter le premier message dans l'état d'attente qui est stocké par l'unité de stockage (1903) lorsque l'UE entre dans le mode connecté.

12. Premier dispositif de réseau selon l'une quelconque des revendications 7 à 11, dans lequel le premier dispositif de réseau est une entité de plan de commande, CP, et le second dispositif de réseau est une entité de fonction de politique, PF.

13. Système, **caractérisé en ce qu'**il comprend :
le premier dispositif de réseau selon l'une quelconque des revendications 7 à 12 ; et
un second dispositif de réseau, conçu pour envoyer un premier message au premier dispositif de réseau.

14. Support de stockage lisible par ordinateur, conçu pour stocker un code de programme, et le code de programme inclut une instruction permettant de mettre en œuvre le procédé décrit dans l'une quelconque des revendications 1 à 6.
